(19) Europäisches Patentamt
European Patent Office
Office européen des brevets

(11) **EP 2 930 639 B1**

## (12) EUROPEAN PATENT SPECIFICATION

(45) Date of publication and mention
of the grant of the patent:
**24.04.2019 Bulletin 2019/17**

(51) Int Cl.:
*G06F 21/32* *(2013.01)*          *H04L 29/06* *(2006.01)*

(21) Application number: **15157771.5**

(22) Date of filing: **05.03.2015**

(54) **MULTIMODAL BIOMETRIC PROFILING**

MULTIMODALE BIOMETRISCHE PROFILIERUNG

PROFILAGE BIOMÉTRIQUE MULTIMODAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2014 IN CH19002014
09.09.2014 US 201414481331**

(43) Date of publication of application:
**14.10.2015 Bulletin 2015/42**

(73) Proprietor: **Accenture Global Services Limited
Dublin 4 (IE)**

(72) Inventors:
• **Gn, Madhusudan
560025 Bangalore (IN)**
• **Paul, Sanjoy
560102 Bangalore, Karnataka (IN)**
• **Gupta, Deepmala
560025 Bangalore (IN)**

(74) Representative: **Müller-Boré & Partner
Patentanwälte PartG mbB
Friedenheimer Brücke 21
80639 München (DE)**

(56) References cited:
WO-A1-98/38567          WO-A1-2004/031920
US-A1- 2010 060 942

• **RATNAKIRTI ROY ET AL: "Evaluating image steganography techniques: Future research challenges", COMPUTING, MANAGEMENT AND TELECOMMUNICATIONS (COMMANTEL), 2013 INTERNATIONAL CONFERENCE ON, IEEE, 21 January 2013 (2013-01-21), pages 309-314, XP032345873, DOI: 10.1109/COMMANTEL.2013.6482411 ISBN: 978-1-4673-2087-0**
• **Anonymous: "Image Steganography", York university, Introduction to Computer Security, 31 January 2014 (2014-01-31), XP055201555, Retrieved from the Internet: URL:http://www.eecs.yorku.ca/course_archiv e/2014-15/W/3482/CSE3482_2015_2_Steganogra phy_Part2_Posted.pdf [retrieved on 2015-07-10]**
• **Shuchi Sharma ET AL: "A HIGH CAPACITY DATA-HIDING TECHNIQUE USING STEGANOGRAPHY", International Journal of Emerging Trends & Technology in Computer Science (IJETTCS), 31 May 2013 (2013-05-31), XP055201543, Retrieved from the Internet: URL:http://www.ijettcs.org/Volume2Issue3/I JETTCS-2013-06-24-131.pdf [retrieved on 2015-07-10]**
• **KHAN ET AL: "Chaotic secure content-based hidden transmission of biometric templates", CHAOS, SOLITONS AND FRACTALS, PERGAMON, OXFORD, GB, vol. 32, no. 5, 25 January 2007 (2007-01-25), pages 1749-1759, XP005858687, ISSN: 0960-0779, DOI: 10.1016/J.CHAOS.2005.12.015**

- Chander Kant ET AL: "Biometrics Security using Steganography", International Journal of Security, 1 March 2008 (2008-03-01), pages 1-5, XP055200909, Retrieved from the Internet: URL:http://doaj.org/search?source=%7B%22query%22%3A%7B%22bool%22%3A%7B%22must%22%3A% 5B%7B%22term%22%3A%7B%22id%22%3A%2 216ea050 d5050417c82ea6e74a836e154%22%7D%7D%5D %7D%7 D%7D [retrieved on 2015-07-08]
- Santhi K ET AL: "Biometrics based Steganography using Circular Folding in DWT Domain", International Journal of Computer Applications, 1 January 2013 (2013-01-01), pages 47-51, XP055200902, New York DOI: 10.5120/9968-4624 Retrieved from the Internet: URL:http://search.proquest.com/docview/128 3025971 [retrieved on 2015-07-08]
- AGRAWAL N ET AL: "Biometric data hiding: A 3 factor authentication approach to verify identity with a single image using steganography, encryption and matching", COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20 June 2009 (2009-06-20), pages 85-92, XP031606962, ISBN: 978-1-4244-3994-2

**Description**

BACKGROUND

Biometrics typically refers to the identification of humans by their physiological and/or behavioral characteristics or traits. Examples of physiological biometric characteristics or traits typically relate to face recognition, DNA, fingerprinting, palm printing, hand geometry, iris recognition, retina recognition, and odor/scent. Examples of behavioral biometric characteristics or traits are typically related to the pattern of behavior of a person, and include typing rhythm, gait, and voice. Once such biometric information for a person is captured, the biometric information is typically stored in a secure environment for further analysis and verification of an unknown person's identity.

RATNAKIRTI ROY ET AL "Evaluating image steganography techniques: Future research challenges" relates to steganography which is the art of 'concealed writing' and refers to techniques that bide information inside innocuous looking objects known as 'Cover Objects'. There are different types of covers available for embedding secret information but images are pervasive in day to day applications and have high redundancy in representation. Thus, they are appealing contenders to be used as cover objects. The paper evaluates the different algorithms for digital, image steganography both in the spatial and transform domain like LSB substitution, OPAP, Pixel Indicator Technique, F5 etc. and tries to put light on some possible future research directions in the topic of consideration.

WO 2004/031920 A1 relates to a security system for controlling access to a computer system utilising a smartcard reader or encoder coupled to the computer system. A smartcard encoded with data is read using the smartcard reader or encoder. Authentication data from the smartcard reader or encoder is then checked to determine whether access to the computer system is granted or prohibited. If a determination is made to grant access, access to the computer system is granted. Biometric data is required from a user and must be identified with that of an authorised user before access is granted to the computer system. The smartcard encoded with details of biometric data is read, and actual biometric data is sensed.

AGRAWAL N ET AL "Biometric data hiding: A3 Factor authentication approach to verify identity with a single image using steganography, encryption and matching" relates to a Digital Steganography which exploits the use of host data to hide a piece of information in such a way that it is imperceptible to a human observer. Its main objectives are imperceptibility, robustness and high payload. DCT Domain message embedding in Spread Spectrum Steganography describes a novel method of using redundancy in DCT coefficients. According to the paper, it is improved upon the method of DCT embedding by using the sign of the DCT coefficients to get better accuracy of retrieved data and more robustness under channel attacks like channel noise and JPEG compression artifacts while maintaining the visual imperceptibility of cover image, and even extending the method further to obtain higher payloads. Also this method is applied for secure biometric data hiding, transmission and recovery. Iris code templates and fingerprints are hidden in the host image which can be any arbitrary image, such as face biometric modality and transmit the so formed imperceptible Stego-Image securely and robustly for authentication, and yet obtain perfect reconstruction and classification of iris codes and retrieval of fingerprints at the receiving end without any knowledge of the cover image i.e. a blind method of steganography, which in this case is used to hide biometric template in another biometric modality.

BRIEF DESCRIPTION OF DRAWINGS

Features of the present disclosure are illustrated by way of examples shown in the following figures. In the following figures, like numerals indicate like elements, in which:

Figure 1 illustrates a detailed architecture of a multimodal biometric profiling system, according to an example of the present disclosure;

Figure 2 illustrates a high level flow chart of operation of a security requirement determination module of the multimodal biometric profiling system of Figure 1, according to an example of the present disclosure;

Figure 3 illustrates a pixel divided into 8 bits, and the least and most significant parts of the pixel, according to an example of the present disclosure;

Figure 4 illustrates threshold determination for embedding of biometric template bits in the 6th and 5th bit positions of cover image pixels, according to an example of the present disclosure;

Figure 5 illustrates the maximum percentage of cover image pixels considered for embedding in the 6th and 5th bit positions, according to an example of the present disclosure;

Figure 6 illustrates a flow chart of multimodal biometric profiling implemented by the multimodal biometric profiling system of Figure 1, according to an example of the present disclosure;

Figure 7 illustrates a high level flow chart of multimodal biometric profiling and verification implemented by the multimodal biometric profiling system of Figure 1, according to an example of the present disclosure;

Figure 8 illustrates a method for multimodal biometric profiling, according to an example of the present disclosure;

Figure 9 illustrates further details of the method for multimodal biometric profiling, according to an example of the present disclosure; and

Figure 10 illustrates a computer system, according to an example of the present disclosure.

DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

For biometric profiling, captured biometric information is typically stored in a secure environment for further analysis and verification, for example, of an unknown person's identity. However, an unauthorized entity may intercept the biometric information as it is being routed to a storage location, and thus obtain a person's biometric information. An unauthorized entity may also modify and/or otherwise tamper with the stored biometric information to prevent accurate verification of an unknown person's identity. The option to store biometric information along with other information related to a person, such as the person's cover image, may also be limited due to the storage capacity of a database that may include biometric related information for thousands of individuals. Similarly, in the case of smart cards that have limited storage capacity, storage of biometric information along with other information related to a person may be limited. Other aspects related to biometric information may include bandwidth related limitations on the amount of data that may be transmitted through a network. For example, it may be time consuming to transmit a relatively large amount of biometric data through a low bandwidth network. A person or an entity may also be opposed to having biometric data traverse through a network, based, for example, on privacy concerns.

As biometric technologies become more widely available, the aforementioned aspects related to biometric profiling become more prevalent. As such, different applications that employ biometric profiling may accept one or more of the aforementioned limitations of current biometric technologies. For example, biometric profiling may be employed for facilitating international travel, bank automated teller machines, and even school lunch payments. Different applications that employ biometric profiling in such diverse areas may accept one or more of the aforementioned limitations of current biometric technologies. However, regardless of the limitations that are acceptable in a particular area of biometric profiling, for biometric characteristics and traits that are irrevocable for a person, if a biometric template (i.e., data related to physiological and/or behavioral characteristics or traits) of a person is compromised, that particular template may not be usable for any other purpose since the compromised template may be misused by unauthorized entities. Hence, the biometric data should be stored and transmitted in a secure manner.

One method of addressing some of the aforementioned aspects related to biometric profiling involves the use of cryptography as a mechanism for encryption of biometric templates. However, an encrypted biometric template is secure as long as the secret key is secure. Once the secret key is compromised, an unauthorized entity may modify and/or tamper with the encrypted biometric template.

A multimodal biometric profiling system and a method for multimodal biometric profiling are disclosed herein, and address the aforementioned aspects related to biometric profiling by encrypting sensitive biometric data depending on a security requirement using steganography. The present invention is defined by the appended independent claims. For the system and method disclosed herein, security requirements may be categorized based on high security applications, medium security applications, and low security applications. High security applications may include, for example, defense applications, border control, etc. Medium security applications may include, for example, civilian applications, banking applications, etc. Low security applications may include, for example, time and attendance, forensic applications, etc. The system and method disclosed herein may employ steganography to secure a biometric template according to a security requirement, and to further conceal the existence of the biometric template. According to an example, a plurality of multimodal biometric characteristics or traits may be combined into a single profile of a person, thus reducing the size of the overall biometric information. The system and method disclosed herein may provide for compression of sensitive data such that the sensitive date may be stored, for example, in a limited storage capacity of a portable token. The system and method disclosed herein may also provide for the concealment of the very existence of biometric data using steganography.

According to an example, a multimodal biometric profiling system is disclosed herein, and may include a processor. An input module that is executed by the processor may receive a cover image (e.g., a facial or another image of a person) and a biometric template (e.g., a template that includes data related to physiological and/or behavioral characteristics or traits) for a person. A security requirement determination module that is executed by the processor may receive an indication of a security requirement (e.g., high security, medium security, or low security) related to biometric profiling for the person. A threshold determination module that is executed by the processor may determine a threshold value (e.g., $y_1$ or $y_2$ as described herein) based on the indicated security requirement. The threshold value may limit a number of biometric template bits of the biometric template that are embedded in a predetermined bit position (e.g., 6th or 5th bit position as described herein) of a cover image pixel of the cover image based on cover image intensity (e.g., percentage of cover image pixels in intensity range 192-255 or 96-255 as described herein) associated with the predetermined bit position (e.g., 6th or 5th bit position as described herein).

According to an example, a method for multimodal biometric profiling is disclosed herein and may include receiving an image and a biometric template for a person. The method for multimodal biometric profiling may further include determining, by a processor, a threshold value for embedding biometric template bits of the biometric template in a 5th or 6th bit position of an image pixel of the image. As described herein, the image pixel of the image may be divisible into 8 bits, and a pixel intensity of the image pixel increases from bit 1 to bit 8.

According to an example, a non-transitory computer readable medium having stored thereon machine readable instructions for multimodal biometric profiling is disclosed herein. The machine readable instructions, that when executed, cause a processor to receive an image and a template to be embedded in the image. The machine readable instructions, that when executed, further cause the processor to determine a threshold value based on the image for limiting embedding of template bits of the template in a predetermined bit position of an image pixel of the image.

The multimodal biometric profiling system and the method for multimodal biometric profiling disclosed herein may provide adaptive secure biometric profiling to facilitate profiling of biometric data based on a security requirement for a particular application. Whereas an unauthorized entity may attempt to decrypt an encrypted template, the system and method disclosed herein may hide the very existence of a biometric template. The existence of a biometric template may be concealed without adding any overhead. The system and method disclosed herein may be useful in a memory constrained environment, such as, for example, for storage of biometric data on smart cards, e-passports, digital tokens, mobile devices, etc. The system and method disclosed herein may provide for the storage of muitipie biometric traits in the same space that may be required for storage of a single biometric trait, which may be helpful in case of two factor authentication involving all biometric traits. For the system and method disclosed herein, the biometric information may be transmitted even on a relatively low bandwidth network. For biometrics that are used in various business services such as banks or health care areas that rely on storing biometric information of a person on portable tokens such as smart cards that have limited memory capacity, the system and method disclosed herein may provide for such business services to use multimodal biometrics of an individual, and store the multimodal biometrics securely in any memory stringent environment. Moreover, the system and method disclosed herein may provide for improved security while sending biometric data over any mode of communication channel.

The multimodal biometric profiling system and the method for multimodal biometric profiling disclosed herein provide a technical solution to technical problems related, for example, to biometric profiling. In many instances, biometric profiling can be a daunting task, for example, due to the potential of unauthorized interception of biometric information during transmittal, or unauthorized modification of biometric information. The system and method disclosed herein provide the technical solution of receiving a cover image and a biometric template for a person, and receiving an indication of a security requirement related to biometric profiling for the person. A threshold value may be determined based on the indicated security requirement. The threshold value may limit a number of biometric template bits of the biometric template that are embedded in a predetermined bit position of a cover image pixel of the cover image based on cover image intensity associated with the predetermined bit position. Based on the embedding of the biometric template in the cover image, the existence of the embedded biometric template may be concealed from an unauthorized entity.

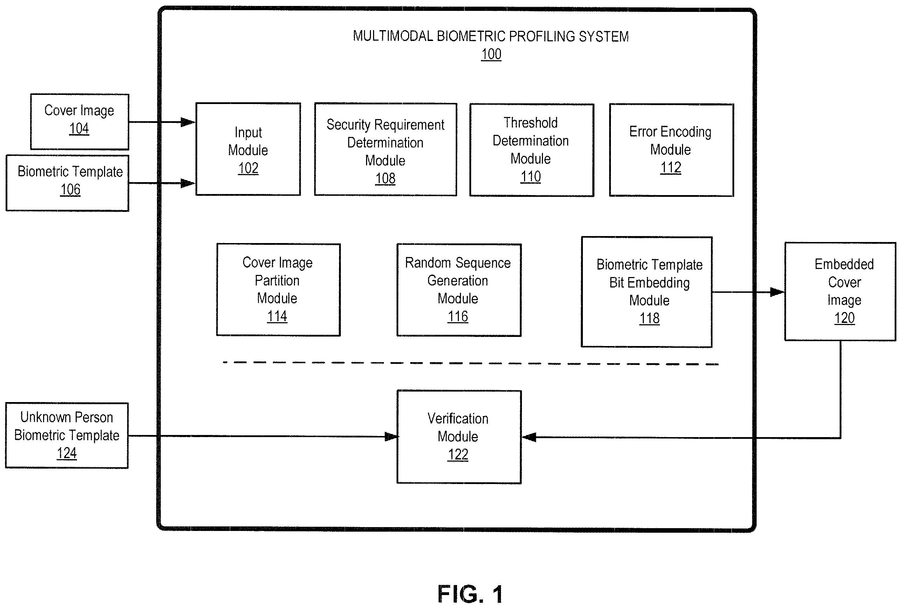

Figure 1 illustrates a detailed architecture of a multimodal biometric profiling system 100, according to an example of the present disclosure. The system 100 may include an input module 102 to receive a cover image 104, such as, for example, a facia! image for a person. Alternatively or additionally, the cover image 104 may encompass any type of image related to a person. The input module 102 may further receive a biometric template 106 that may include a plurality of biometric templates related to various physiological and/or behavioral characteristics and/or traits of the person. The biometric template 106 may include a data stream represented by 0's and 1's (i.e., binary 0's and 1's). Alternatively or additionally, other representation techniques, such as, for example, decimal, hexadecimal, etc.,

may be used. A security requirement determination module 108 is to receive an indication (or a selection) of a security requirement from a plurality of security requirements that may include high security, medium security, and low security. The security requirements may relate to any type of security (e.g., high security related to defense applications, border control, etc., medium security related to civilian applications, banking applications, etc., or low security related to time and attendance, forensic applications, etc.) that is needed for securing the biometric template 106. A threshold determination module 110 is to determine a threshold value based on the indicated security requirement. The threshold value may be used to limit a number of biometric template bits of the biometric template 106 that are embedded in a predetermined bit position of a cover image pixel of the cover image 104 based on cover image intensity associated with the predetermined bit position. For example, the threshold determination module 110 is to determine threshold values for embedding biometric template bits of the biometric template 106 in the 6th and 5th bit positions (as described in further detail below) of cover image pixels of the cover image 104. An error encoding module 112 is to provide for error encoding of the biometric template 106. A cover image partition module 114 is to partition the cover image 104 into a plurality of predetermined blocks. A random sequence generation module 116 is to generate a random sequence to randomize selection of cover image pixels of the blocks of the cover image 104. A biometric template bit embedding module 118 is to embed a biometric template bit of the biometric template 106 in an appropriate bit position of a cover image pixel of the blocks of the cover image 104 based on a total number of 1's in predetermined bit positions of the cover image pixel of the blocks according to the randomized selection of the cover image pixels of the blocks of the cover image 104. For example, the biometric template bit embedding module 118 is to embed a biometric template bit of the biometric template 106 in an appropriate bit position of a cover image pixel of a block of the cover image 104 based on a total number of 1's in the 7th and 8th bit positions of the cover image pixel (e.g., for high security), or a total number of 1's in the 6th, 7th, and 8th bit positions of the cover image pixel (e.g., for medium and low security). The biometric template bit embedding module 118 may generate an embedded cover image 120 that includes the biometric template 106 embedded therein. The embedded cover image 120 may be designated as a multimodal biometric profile. A verification module 122 is to verify an identity of an unknown person, or otherwise identify an unknown person, by generating a score that represents a comparison of an unknown person biometric template 124 to the biometric template 106 embedded in the embedded cover image 120. The score may be compared against a predetermined score threshold to determine whether there is a match.

As described herein, the modules and other elements of the multimodal biometric profiling system 100 may be machine readable instructions stored on a non-transitory computer readable medium. In addition, or alternatively, the modules and other elements of the multimodal biometric profiling system 100 may be hardware or a combination of machine readable instructions and hardware.

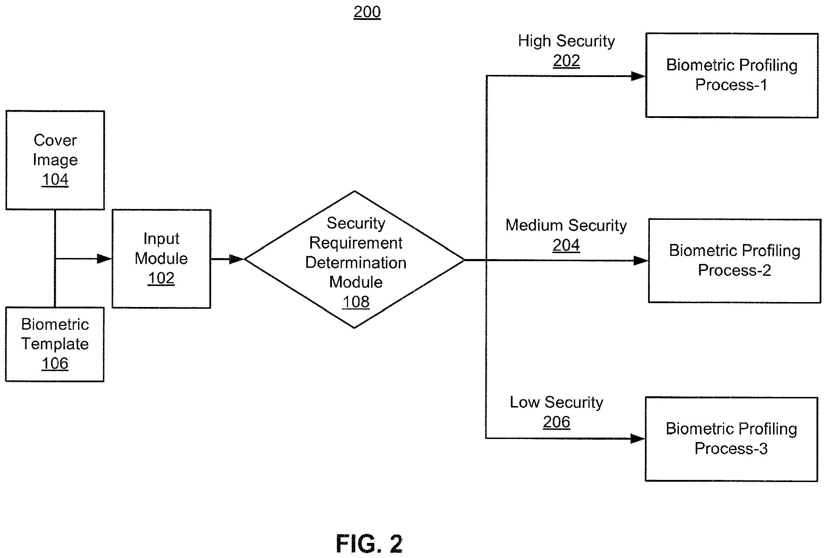

Figure 2 illustrates a high level flow chart 200 of operation of the security requirement determination module 108, according to an example of the present disclosure. The security requirement determination module 108 may receive an indication of a security requirement from a plurality of security requirements that may include high security 202, medium security 204, and low security 206. As described in further detail herein, the indicated security requirement may be used by the biometric template bit embedding module 118 to respectively apply a biometric profiling process-1, a biometric profiling process-2, or a biometric profiling process-3, for embedding of a biometric template bit of the biometric template 106 in an appropriate bit position of a cover image pixel of a block of the cover image 104. The high security 202, medium security 204, and low security 206 security requirements may be provided in a look-up table that may be used to match a type of application to a corresponding security level. For example, as described herein, high security may be related to defense applications, border control, etc., medium security may be related to civilian applications, banking applications, etc., and low security may be related to time and attendance, forensic applications, etc. The security requirement for the same application may also change dynamically based on time. For example, in an event of a war, the security requirement of an otherwise low security application may be elevated to high. The security requirement of the same application may also change depending on geography. For example, two different countries may require different security requirements for the same application. The security requirements may also change based on compliance requirements. For example, two different countries may require different types of compliance (e.g., more stringent, or more lenient).

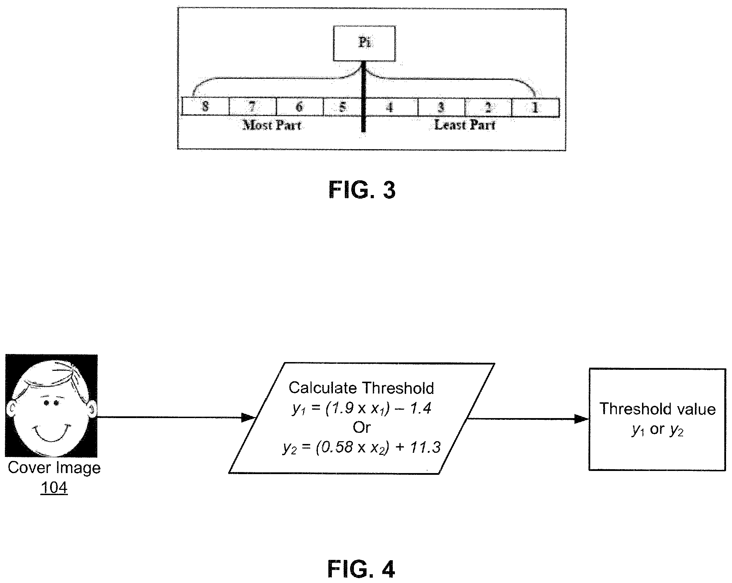

Figure 3 illustrates a pixel divided into 8 bits, and the least and most significant parts of the pixel, according to an example of the present disclosure. With respect to the biometric profiling processes 1-3 applied by the biometric template bit embedding module 118, referring to Figures 2 and 3, each pixel of the cover image 104 may be divided into 8 bits. The least significant part of a pixel may be represented by bits 1-4, and the most significant part of a pixel may be represented by bits 5-8.

Figure 4 illustrates threshold determination for embedding of biometric template bits in the 6th and 5th bit positions of cover image pixels, according to an example of the present disclosure. The threshold determination module 110 may determine threshold values for embedding biometric template bits of the biometric template 106 in the 6th and 5th bit positions of cover image pixels. In order to determine the threshold values, the cover image 104 may be divided into three channels, namely red, green, and blue (RGB). With respect to the 6th bit of a cover image pixel, the threshold determination module 110 may determine a value $x_1$ that represents a percentage of pixels in the intensity range 192-255. Similarly, with respect to the 5th bit of a cover image pixel, the threshold determination module 110 may determine a value $x_2$ that represents a percentage of pixels in the intensity range 96-255. Based on the value of $x_1$, with respect to the 6th bit, the threshold determination module 110 may determine a threshold percentage (i.e., $y_1$) of pixels that can be considered for embedding in the 6th bit position as follows:

$$y_1 = (1.9 \times x_1) - 1.4 \qquad \text{Equation (1)}$$

Similarly, based on the value of $x_2$, with respect to the 5th bit, the threshold determination module 110 may determine a threshold percentage (i.e., $y_2$) of pixels that can be considered for embedding in the 5th bit position as follows:

$$y_2 = (0.58 \times x_2) - 11.3 \qquad \text{Equation (2)}$$

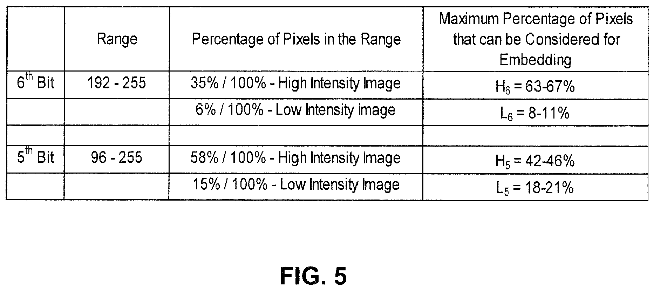

With respect to Equations (1) and (2), the values specified in Equations (1) and (2) may be based on a maximum percentage of cover image pixels that can be considered for embedding in 6th and 5th bit positions. Specifically, Figure 5 illustrates the maximum percentage of cover image pixels considered for embedding in the 6th and 5th bit positions, according to an example of the present disclosure. Referring to Figures 4 and 5, with respect to the 6th bit, if at least approximately 35% of the cover image pixels in the cover image 104 are in the intensity range of 192-255, then the cover image 104 may be designated as a high intensity image, and further, $H_6$ may represent a maximum percentage of cover image pixels of the cover image 104 that can be considered for embedding in the 6th bit position. Similarly, with respect to the 6th bit, if up to approximately 6% of the cover image pixels in the cover image 104 are in the intensity range of 192-255, then the cover image 104 may be designated as a low intensity image, and further, $L_6$ may represent a maximum percentage of cover image pixels of the cover image 104 that can be considered for embedding in the 6th bit position. With respect to $H_6$ and $L_6$, $H_6$ may include a range of approximately 63% - 67%, and approximately 65% in a particular example, and $L_6$ may include a range of approximately 8% - 11%, and approximately 10% in a particular example. Generally, with respect to $H_6$ and $L_6$, $H_6$ may include a range between $H_6T_{min}$ and $H_6T_{max}$, and $L_6$ may include a range between $L_6T_{min}$ and $L_6T_{max}$. The ranges $H_6T_{min}$ and $H_6T_{max}$, and $L_6T_{min}$ and $L_6T_{max}$ may be based on a category, and further, on a type of the cover image 104 within the category. For example, the cover image 104 for a category related to ethnicities may yield different ranges for $H_6$ and $L_6$ for different types of ethnicities. For example, a typical ethnicity may include $H_6T_{min}$ and $H_6T_{max}$ of approximately 63% and 67%, respectively, and $L_6T_{min}$ and $L_6T_{max}$ of approximately 8% and 11%, respectively. A specific Caucasian ethnicity may include different values for $H_6T_{min}$ and $H_6T_{max}$, and $L_6T_{min}$ and $L_6T_{max}$. With respect to the 6th bit, between approximately 6% and 35%, the value of $y_1$ may be based on a sliding window specified by Equation (1). With respect to the 5th bit, if up to approximately 58% of the cover image pixels in the cover image 104 are in the intensity range of 96-255, then the cover image 104 may be designated as a high intensity image, and further, $H_5$ may represent a maximum percentage of cover image pixels of the cover image 104 that can be considered for embedding in the 5th bit position. Similarly, with respect to the 5th bit, if up to approximately 15% of the cover image pixels in the cover image 104 are in the intensity range of 96-255, then the cover image 104 may be designated as a low intensity image, and further, $L_5$ may represent a maximum percentage of cover image pixels of the cover image 104 that can be considered for embedding in the 5th bit position. With respect to $H_5$ and $L_5$, $H_5$ may include a range of approximately 42% - 46%, and approximately 45% in a particular example, and $L_5$ may include a range of approximately 18% - 21%, and approximately 20% in a particular example. Generally, with respect to $H_5$ and $L_5$, $H_5$ may include a range between $H_5T_{min}$ and $H_5T_{max}$, and $L_5$ may include a range between $L_5T_{min}$ and $L_5T_{max}$. For example, for $H_5$, $H_5T_{min}$ and $H_5T_{max}$ are approximately 42% and 46%, respectively. Similarly, for $L_5$, $L_5T_{min}$ and $L_5T_{max}$ are approximately 18% and 21%, respectively. With respect to the 5th bit, between approximately 15% and 58%, the value of $y_2$ may be based on a sliding window specified by Equation (2).

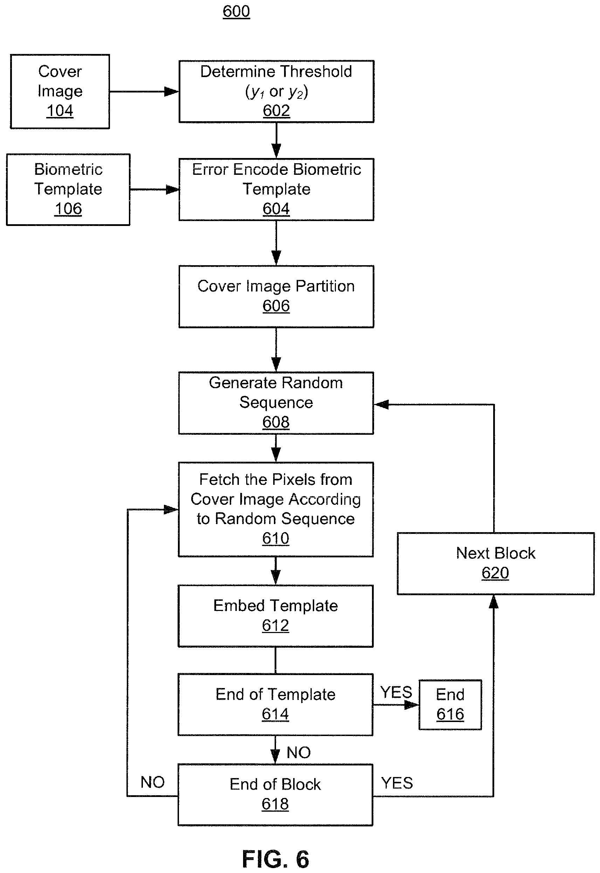

Figure 6 illustrates a flow chart 600 of multimodal biometric profiling implemented by the multimodal biometric profiling system 100, according to an example of the present disclosure. Referring to Figures 2-6, the biometric profiling process-1, the biometric profiling process-2, and the biometric profiling process-3 are described for embedding of a biometric template bit of the biometric template 106 in an appropriate bit position of a cover image pixel of a block of the cover image 104.

As shown in Figure 6, with respect to the biometric profiling process-1 that is applied based on an indication of the high security 202, at block 602, the biometric profiling process-1 may include receiving the cover image 104, and determining the threshold value $y_1$. For example, the threshold determination module 110 may determine the threshold percentage $y_1$ of cover image pixels that can be considered for embedding in the 6th bit position using Equation (1).

With respect to the biometric profiling process-1 that is related to the high security 202, at block 604, the error encoding module 112 may error encode the biometric template 106 using an error encoding process. For example, the error encoding module 112 may error encode the biometric template 106 to protect the biometric template 106 from errors, or check for errors.

With respect to the biometric profiling process-1 that is related to the high security 202, at block 606, the cover image partition module 114 may partition the cover image 104 into a plurality of predetermined blocks. For example, the cover image 104 may be partitioned into n 8x8 pixel blocks (i.e., *n* blocks that include 64 pixels each).

With respect to the biometric profiling process-1 that is related to the high security 202, at block 608, the random sequence generation module 116 may generate a random sequence to randomize selection of cover image pixels of the blocks of the cover image 104. For example, for the n blocks of the cover image 104, starting with the first block, the random sequence generation module 116 may generate a random sequence to randomize selection of each of the 64 pixels of the blocks of the cover image 104.

With respect to the biometric profiling process-1 that is related to the high security 202, at block 610, the biometric template bit embedding module 118 may fetch the cover image pixels from the cover image 104 according to the random sequence generated at block 608. For example, assuming that the cover image 104 includes *n* blocks, for the first block of the *n* blocks, at block 610, the biometric template bit embedding module 118 may fetch the appropriate pixel $px_z$ (i.e., one of the 64 pixels) of the first block from the cover image 104 according to the random sequence generated at block 608.

With respect to the biometric profiling process-1 that is related to the high security 202, at block 612, the biometric template bit embedding module 118 may embed (e.g., by flipping a corresponding bit value from 0 to 1, or from 1 to 0, or otherwise changing a corresponding bit value) a biometric template bit of the biometric template 106 in an appropriate bit position of a cover image pixel of a block of the cover image 104 based on a total number of 1's in the 7th and 8th bit positions of the cover image pixel. For example, with respect to the biometric profiling process-1 that is related to the high security 202, assuming that the cover image 104 includes *n* blocks, for the first block of the *n* blocks, assuming that pixel $px_z$ of the first block from the cover image 104 is fetched according to the random sequence generated at block 608, the biometric template bit embedding module 118 may embed a biometric template bit of the biometric template 106 in an appropriate bit position of pixel $px_z$ of the first block of the cover image 104 based on a total number of 1's in the 7th and 8th bit positions of the pixel. With respect to the biometric profiling process-1 that is related to the high security 202, for block 612, the embedding of the biometric template bits of the biometric template 106 may be based on the following three cases (i.e., Case-0, Case-1, Case-2). For Case-0, if the total number of 1's in the 7th and 8th bit positions of cover image pixel $px_z$ is equal to 0 (i.e., both the 7th and 8th bits have a value of 0), then the biometric template bit embedding module 118 may embed biometric template bits of the biometric template 106 in the 1st and 2nd bit positions of the appropriate cover image pixel of the appropriate block of the cover image 104 (e.g., 1st and 2nd bit positions of the cover image pixel $px_z$ of the first block of the cover image 104 according to the random sequence generated at block 608). For Case-1, if the total number of 1's in the 7th and 8th bit positions of cover image pixel $px_z$ is equal to 1 (i.e., one of the 7th and 8th bits has a value of 1), then the biometric template bit embedding module 118 may embed biometric template bits of the biometric template 106 in the 1st, 2nd, and 3rd bit positions of the appropriate cover image pixel of the appropriate block of the cover image 104 (e.g., 1st, 2nd, and 3rd bit positions of the cover image pixel $px_z$ of the first block of the cover image 104 according to the random sequence generated at block 608). For Case-2, if the total number of 1's in the 7th and 8th bit positions of cover image pixel $px_z$ is equal to 2 (i.e., both of the 7th and 8th bits have a value of 1), then the biometric template bit embedding module 118 may embed biometric template bits of the biometric template 106 in the 1st bit position, and if a biometric profiling process-1 counter value is less than $y_1$, then in the 6th bit position, and otherwise in the 2nd bit position of the appropriate cover image pixel of the appropriate block of the cover image 104 (e.g., 1st bit position, and if the biometric profiling process-1 counter value is less than $y_1$, then in the 6th bit position, and otherwise in the 2nd bit position of the cover image pixel $px_z$ of the first block of the cover image 104 according to the random sequence generated at block 608). The biometric profiling process-1 counter value may be incremented by a biometric profiling process-1 counter that counts the number of biometric template bits of the biometric template 106 embedded in the 6th bit position of all of the blocks of the cover image 104.

With respect to the biometric profiling process-1 that is related to the high security 202, at block 614, after embedding a biometric template bit of the biometric template 106 in an appropriate bit position of a cover image pixel of a block of the cover image 104, the biometric template bit embedding module 118 may determine whether an end of the biometric template 106 is reached (i.e., all bits of the biometric template 106 are embedded). In response to a determination that the end of the biometric template 106 is reached, processing may end at block 616. In response to a determination that the end of the biometric template 106 is not reached, processing may continue to block 618.

With respect to the biometric profiling process-1 that is related to the high security 202, at block 618, after embedding a biometric template bit of the biometric template 106 in an appropriate bit position of a cover image pixel of a block of the cover image 104, the biometric template bit embedding module 118 may determine whether an end of the block is reached (e.g., in the event all 64 pixels of the block include embedded biometric template bits of the biometric template 106). In response to a determination that the end of the block is not reached, processing may revert to block 610 to fetch another cover image pixel from the same block of the cover image 104 according to the random sequence generated at block 608. In response to a determination that the end of the block is reached, processing may proceed to block 620 to generate a random sequence to randomize selection of cover image pixels of the next block of the cover image 104. In this manner, the biometric template bit embedding module 118 may embed all of the biometric template bits of the biometric template 106 in the appropriate bit position of the cover image pixels of the blocks of the cover image 104.

As shown in Figure 6, with respect to the biometric profiling process-2 that is applied based on selection of the medium security 204, at block 602, the biometric profiling process-2 may include receiving the cover image 104, and determining the threshold value $y_2$. For example, the threshold determination module 110 may determine the threshold percentage $y_2$ of cover image pixels that can be considered for embedding in the $5^{th}$ bit position using Equation (2).

With respect to the biometric profiling process-2 that is related to the medium security 204, the processing at blocks 604 - 610, and 614 - 620 may proceed in the same manner as discussed above with reference to the biometric profiling process-1 that is related to the high security 202.

With respect to the biometric profiling process-2 that is related to the medium security 204, at block 612, the biometric template bit embedding module 118 may embed a biometric template bit of the biometric template 106 in an appropriate bit position of a cover image pixel of a block of the cover image 104 based on a total number of 1's in the $6^{th}$, $7^{th}$, and $8^{th}$ bit positions of the pixel. For example, with respect to the biometric profiling process-2 that is related to the medium security 204, assuming that the cover image 104 includes n blocks, for the first block of the n blocks, assuming that cover image pixel $px_z$ of the first block from the cover image 104 is fetched according to the random sequence generated at block 608, the biometric template bit embedding module 118 may embed a biometric template bit of the biometric template 106 in an appropriate bit position of cover image pixel $px_z$ of the first block of the cover image 104 based on a total number of 1's in the $6^{th}$, $7^{th}$, and $8^{th}$ bit positions of the cover image pixel. With respect to the biometric profiling process-2 that is related to the medium security 204, for block 612, the embedding of the biometric template bits of the biometric template 106 may be based on the following four cases (i.e., Case-0, Case-1, Case-2, and Case-3). For Case-0, if the total number of 1's in the $6^{th}$, $7^{th}$, and $8^{th}$ bit positions of cover image pixel $px_z$ is equal to 0 (i.e., the $6^{th}$, $7^{th}$, and $8^{th}$ bits each have a value of 0), then the biometric template bit embedding module 118 may embed biometric template bits of the biometric template 106 in the $1^{st}$ and $2^{nd}$ bit positions of the appropriate cover image pixel of the appropriate block of the cover image 104 (e.g., $1^{st}$ and $2^{nd}$ bit positions of the cover image pixel $px_z$ of the first block of the cover image 104 according to the random sequence generated at block 608). For Case-1, if the total number of 1's in the $6^{th}$, $7^{th}$, and $8^{th}$ bit positions of cover image pixel $px_z$ is equal to 1 (i.e., one of the $6^{th}$, $7^{th}$, and $8^{th}$ bits has a value of 1), then the biometric template bit embedding module 118 may embed biometric template bits of the biometric template 106 in the $1^{st}$, $2^{nd}$, and $3^{rd}$ bit positions of the appropriate cover image pixel of the appropriate block of the cover image 104 (e.g., $1^{st}$, $2^{nd}$, and $3^{rd}$ bit positions of the cover image pixel $px_z$ of the first block of the cover image 104 according to the random sequence generated at block 608). For Case-2, if the total number of 1's in the $6^{th}$, $7^{th}$, and $8^{th}$ bit positions of cover image pixel $px_z$ is equal to 2 (i.e., two of the $6^{th}$, $7^{th}$, and $8^{th}$ bits have a value of 1), then the biometric template bit embedding module 118 may embed biometric template bits of the biometric template 106 in the $1^{st}$ bit position, and if a biometric profiling process-2 counter value is less than $y_2$, then in the $5^{th}$ bit position, and otherwise in the $3^{rd}$ bit position of the appropriate cover image pixel of the appropriate block of the cover image 104 (e.g., $1^{st}$ bit position, and if a biometric profiling process-2 counter value is less than $y_2$, then in the $5^{th}$ bit position, and otherwise in the $3^{rd}$ bit position of the cover image pixel $px_z$ of the first block of the cover image 104 according to the random sequence generated at block 608). For Case-3, if the total number of 1's in the $6^{th}$, $7^{th}$, and $8^{th}$ bit positions of cover image pixel $px_1$ is equal to 3 (i.e., each of the $6^{th}$, $7^{th}$, and $8^{th}$ bits has a value of 1), then the biometric template bit embedding module 118 may embed biometric template bits of the biometric template 106 in the $1^{st}$ and $2^{nd}$ bit positions, and if the biometric profiling process-2 counter value is less than $y_2$, then in the $5^{th}$ bit position, and otherwise in the $3^{rd}$ bit position of the appropriate cover image pixel of the appropriate block of the cover image 104 (e.g., $1^{st}$ and $2^{nd}$ bit positions, and if the biometric profiling process-2 counter value is less than $y_2$, then in the $5^{th}$ bit position, and otherwise in the $3^{rd}$ bit position of the cover image pixel $px_z$ of the first block of the cover image 104 according to the random sequence generated at block 608). The biometric profiling process-2 counter value may be incremented by a biometric profiling process-2 counter that counts the number of biometric template bits of the biometric template 106 embedded in the $5^{th}$ bit position of all of the blocks of the cover image 104.

Referring to Figure 6, with respect to the biometric profiling process-3 that is applied based on selection of the low security 206, at block 602, the biometric profiling process-3 may include receiving the cover image 104. For the biometric profiling process-3 that is applied based on selection of the low security 206, a threshold value is not needed, and processing may proceed to block 604.

With respect to the biometric profiling process-3 that is related to the low security 206, the processing at blocks 604 - 610, and 614 - 620 may proceed in the same manner as discussed above with reference to the biometric profiling process-1 that is related to the high security 202, and likewise to the biometric profiling process-2 that is related to the medium security 204.

With respect to the biometric profiling process-3 that is related to the low security 206, at block 612, the biometric template bit embedding module 118 may embed a biometric template bit of the biometric template 106 in an appropriate bit position of a cover image pixel of a block of the cover image 104 based on a total number of 1's in the $6^{th}$, $7^{th}$, and $8^{th}$ bit positions of the cover image pixel. For example, with respect to the biometric profiling process-3 that is related to the low security 206, assuming that the cover image 104 includes n blocks, for the first block of the n blocks, assuming that cover image pixel $px_z$ of the first block from the cover image 104 is fetched according to the random sequence generated at block 608, the biometric template bit embedding module 118 may embed a biometric template bit of the biometric template 106 in an appropriate bit position of cover image pixel $px_z$ of the first block of the cover image 104 based on a total number of 1's in the $6^{th}$, $7^{th}$, and $8^{th}$ bit positions of the cover image pixel. With respect to the biometric profiling process-3 that is related to the low security 206, for block 612, the embedding of the biometric template bits of the biometric template 106 may be based on the following four cases (i.e., Case-0, Case-1, Case-2, and Case-3). For Case-0, if the total number of 1's in the $6^{th}$, $7^{th}$, and $8^{th}$ bit positions of cover image pixel $px_z$ is equal to 0 (i.e., the $6^{th}$, $7^{th}$, and $8^{th}$ bits have a value of 0), then the biometric template bit embedding module 118 may embed biometric template bits of the biometric template 106 in the $1^{st}$ and $2^{nd}$ bit positions of the appropriate cover image pixel of the appropriate block of the cover image 104 (e.g., $1^{st}$ and $2^{nd}$ bit positions of the cover image pixel $px_z$ of the first block of the cover image 104 according to the random sequence generated at block 608). For Case-1, if the total number of 1's in the $6^{th}$, $7^{th}$, and $8^{th}$ bit positions of cover image pixel $px_z$ is equal to 1 (i.e., one of the $6^{th}$, $7^{th}$, and $8^{th}$ bits has a value of 1), then the biometric template bit embedding module 118 may embed biometric template bits of the biometric template 106 in the $1^{st}$ and $2^{nd}$ bit positions of the appropriate cover image pixel of the appropriate block of the cover image 104 (e.g., $1^{st}$ and $2^{nd}$ bit positions of the cover image pixel $px_z$ of the first block of the cover image 104 according to the random sequence generated at block 608). For Case-2, if the total number of 1's in the $6^{th}$, $7^{th}$, and $8^{th}$ bit positions of pixel $px_z$ is equal to 2 (i.e., two of the $6^{th}$, $7^{th}$, and $8^{th}$ bits have a value of 1), then the biometric template bit embedding module 118 may embed biometric template bits of the biometric template 106 in the $1^{st}$, $2^{nd}$, and $3^{rd}$ bit positions of the appropriate cover image pixel of the appropriate block of the cover image 104 (e.g., $1^{st}$, $2^{nd}$, and $3^{rd}$ bit positions of the cover image pixel $px_z$ of the first block of the cover image 104 according to the random sequence generated at block 608). For Case-3, if the total number of 1's in the $6^{th}$, $7^{th}$, and $8^{th}$ bit positions of cover image pixel $px_z$ is equal to 3 (i.e., each of the $6^{th}$, $7^{th}$, and $8^{th}$ bits have a value of 1), then the biometric template bit embedding module 118 may embed biometric template bits of the biometric template 106 in the $1^{st}$, $2^{nd}$, and $4^{th}$ bit positions of the appropriate pixel of the appropriate block of the cover image 104 (e.g., $1^{st}$, $2^{nd}$, and $4^{th}$ bit positions of the cover image pixel $px_z$ of the first block of the cover image 104 according to the random sequence generated at block 608).

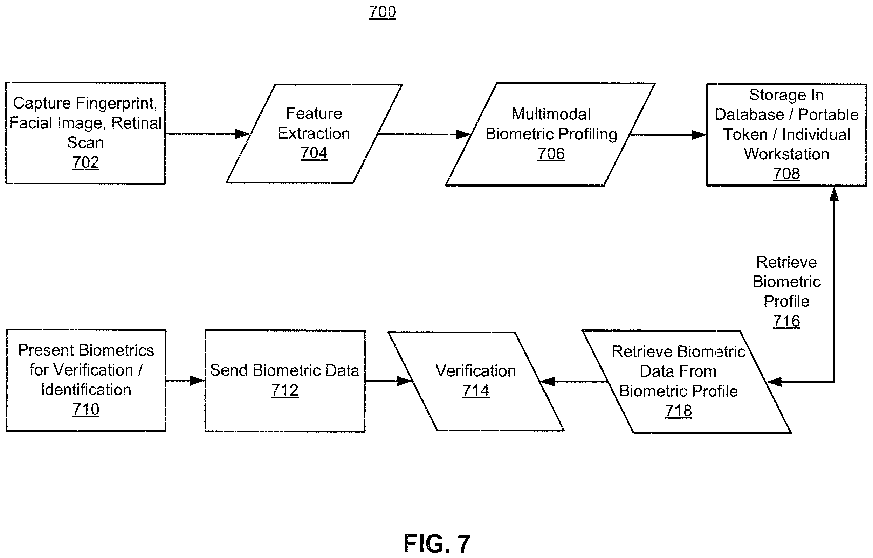

Figure 7 illustrates a high level flow chart 700 of multimodal biometric profiling and verification implemented by the multimodal biometric profiling system 100, according to an example of the present disclosure. At block 702, a facial image of a person may be captured. The facial image may be designated as the cover image 104. Additional physiological and/or behavioral characteristics and/or traits of the person may be captured. For example, a fingerprint and retinal scan of the person may be captured.

At block 704, various features may be extracted from the information captured at block 702. For example, retinal traits may be extracted to generate a retinal template 106. Similarly, fingerprint traits may be extracted to generate a fingerprint template 106. For each identity (i.e., identity of a person), the biometric templates 106 may be designated as follows:

$$E_i = [Finger\_Print\_template_i, Face\_template_i, Iris\_template_i ..] \quad \text{Equation (3)}$$

At block 706, the multimodal biometric profiling system 100 may be used to embed the biometric template 106 (e.g., the retinal template 106, the fingerprint template 106, or both) in the cover image 104 to create a secure biometric profile $P_i$. The embedding of the biometric template 106 may be based on the particular security requirement (e.g., high security 202, medium security 204, or low security 206). With respect to the high security 202, the medium security 204, and the low security 206, the secure biometric profile $P_i$ may be designated as follows:

$$\text{High Security } (P_i) = BiometricProfilingProcess\text{-}1 \ (Cover\_image + E_i) \quad \text{Equation (4)}$$

$$\text{Medium Security } (P_i) = BiometricProfilingProcess\text{-}2 \ (Cover\_image + E_i)$$
$$\text{Equation (5)}$$

$$\text{Low Security } (P_i) = \text{BiometricProfilingProcess-3 (Cover\_image} + E_i) \quad \text{Equation (6)}$$

At block 708, the secure biometric profile $P_i$ may be stored, for example, in a database, in a portable token, and/or in a user's workstation.

In order to verify an unknown person's identity, at block 710, biometrics of the unknown person may be presented for verification/identification. For example, physiological and/or behavioral characteristics or traits of the unknown person may be captured. For example, a fingerprint and retinal scan of the unknown person may be captured. In a similar manner as block 704, various features may be extracted from the information captured for the unknown person. For example, retinal traits may be extracted to generate a retinal template for verification. Similarly, fingerprint traits may be extracted to generate a fingerprint template for verification. For each unknown identity (i.e., identity of the unknown person), the templates for verification may be designated as follows:

$$B_j = [\text{Finger\_Print\_template}_i, \text{Face\_template}_i, \text{Iris\_template}_i, ..] \quad \text{Equation (7)}$$

At block 712, the biometric data (e.g., $B_j$) may be sent to the verification module 122 for verification at block 714 of the identity of the unknown person.

At block 714, the verification module 122 may retrieve at 716 a biometric profile $P_i$ that is to be verified as belonging to the unknown person. Alternatively or additionally, the verification module 122 may retrieve a plurality of biometric profiles $P_i$ that are to be analyzed to identify the unknown person.

At block 718, the biometric data from the biometric profile $P_i$ may be retrieved. For example, the biometric data stored as $E_i$ may be retrieved.

Reverting again to block 714, the verification module 122 may generate a score that represents a comparison of a biometric template from $B_j$ (e.g., the unknown person biometric template 124) to the appropriate biometric template from $E_i$ for the verification and/or identification of the unknown person. The score may be determined as follows:

$$\text{Score} = \text{Compare}(B_j, \text{InverseBiometricProfiling}(P_i)) \quad \text{Equation (8)}$$

Thus, the score may be based on an inverse of the biometric profile $P_i$ that is to be compared to the biometric template from $B_j$. If the score exceeds a predetermined score threshold that may be user configurable, the verification module 122 may confirm the identity of the unknown person (e.g., when comparing a biometric template from $B_j$ to a biometric template from $E_j$ that should belong to the unknown person), or otherwise identify the unknown person (e.g., when comparing a template from $B_j$ to a plurality of templates from $E_i$ that are not particularly known to belong to the unknown person).

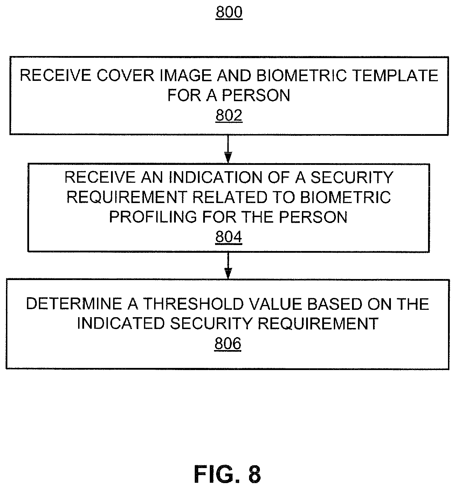

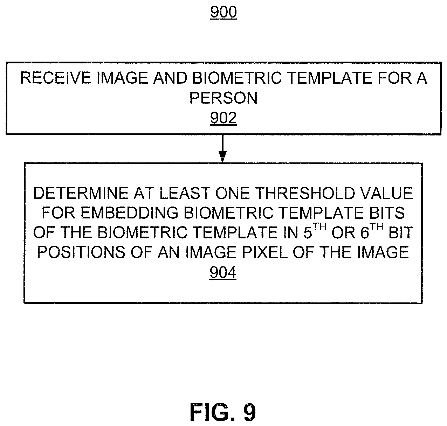

Figures 8 and 9 illustrate flowcharts of methods 800 and 900 for multimodal biometric profiling, according to examples. The methods 800 and 900 may be implemented on the multimodal biometric profiling system 100 described above with reference to Figures 1-7 by way of example and not limitation. The methods 800 and 900 may be practiced in other systems.

Referring to Figure 1 and 8, at block 802, the method 800 may include receiving a cover image and a biometric template for a person. For example, referring to Figure 1, the input module 102 may receive the cover image 104, such as, for example, a facial image for a person, and the biometric template 106 that may include a plurality of biometric templates related to various physiological and/or behavioral characteristics and/or traits of the person.

At block 804, the method 800 may include receiving an indication of a security requirement related to biometric profiling for the person. According to an example, the security requirement may include high security, medium security, or low security. For example, referring to Figure 1, the security requirement determination module 108 may receive an indication (or a selection) of a security requirement from a plurality of security requirements that may include high security, medium security, and low security.

At block 806, the method 800 may include determining a threshold value based on the indicated security requirement. For example, referring to Figure 1, the threshold determination module 110 may determine a threshold value based on the indicated security requirement. The threshold value may limit a number of biometric template bits of the biometric template that are embedded in a predetermined bit position (e.g., 6th or 5th bit position as described herein) of a cover image pixel of the cover image based on cover image intensity (e.g., percentage of cover image pixels in intensity range 192-255 or 96-255 as described herein) associated with the predetermined bit position (e.g., 6th or 5th bit position as described herein).

According to an example, as described herein with reference to Figures 3-5, the limit on the number of biometric template bits of the biometric template that are embedded in the predetermined bit position of the cover image pixel of the cover image may include a determination of whether the cover image intensity indicates a high intensity cover image or a low intensity cover image.

According to an example, as described herein with reference to Figures 3-5, for the high intensity cover image, a maximum percentage of the cover image pixels that can be considered for embedding in the 6th bit position is approximately 63% to 67%, and for the low intensity cover image, a maximum percentage of the cover image pixels that can be considered for embedding in the 6th bit position is approximately 8% to 11%.

According to an example, as described herein with reference to Figures 3-5, for the high intensity cover image, a maximum percentage of the cover image pixels that can be considered for embedding in the 5th bit position is approximately 42% to 46%, and for the low intensity cover image, a maximum percentage of the cover image pixels that can be considered for embedding in the 5th bit position is approximately 18% to 21%.

According to an example, the method 800 may further include partitioning (e.g., by using the cover image partition module 114) the cover image into a plurality of predetermined blocks, generating a random sequence (e.g., by using the random sequence generation module 116) to randomize selection of cover image pixels of at least one of the blocks of the cover image, and embedding a biometric template bit (e.g., by using the biometric template bit embedding module 118) of the biometric template in an appropriate bit position of a cover image pixel of the at least one of the blocks of the cover image based on a total number of 1's in predetermined bit positions of the cover image pixel of the at least one of the blocks according to the randomized selection of the cover image pixels of the at least one of the blocks of the cover image.

According to an example, the method 800 may further include embedding biometric template bits of the biometric template in appropriate bit positions of a cover image pixel of a block of the cover image based on determination of a total number of 1's in 7th and 8th bit positions of the cover image pixel that is divided into a least part that includes bits 1-4 and a most part that includes bits 5-8. For a high security requirement, in response to a determination that the total number of 1's in the 7th and 8th bit positions of the cover image pixel is 0, the biometric template bits of the biometric template may be embedded in 1st and 2nd bit positions of the cover image pixel of the block of the cover image. For the high security requirement, in response to a determination that the total number of 1's in the 7th and 8th bit positions of the cover image pixel is 1, the biometric template bits of the biometric template may be embedded in 1st, 2nd, and 3rd bit positions of the cover image pixel of the block of the cover image. For the high security requirement, in response to a determination that the total number of 1's in the 7th and 8th bit positions of the cover image pixel is 2, the biometric template bits of the biometric template may be embedded in 1st, and if a counter value for a 6th bit position of the cover image pixel of the block of the cover image is less than the threshold value, then in the 6th bit position of the cover image pixel of the block of the cover image, and otherwise in the 2nd bit position of the cover image pixel of the block of the cover image.

According to an example, the method 800 may further include embedding biometric template bits of the biometric template in appropriate bit positions of a cover image pixel of a block of the cover image based on determination of a total number of 1's in 6th, 7th, and 8th bit positions of the cover image pixel that is divided into a least part that includes bits 1-4 and a most part that includes bits 5-8. For a medium security requirement, in response to a determination that the total number of 1's in the in 6th, 7th, and 8th bit positions of the cover image pixel is 0, the biometric template bits of the biometric template may be embedded in 1st and 2nd bit positions of the cover image pixel of the block of the cover image. For the medium security requirement, in response to a determination that the total number of 1's in the in 6th, 7th, and 8th bit positions of the cover image pixel is 1, the biometric template bits of the biometric template may be embedded in 1st, 2nd, and 3rd bit positions of the cover image pixel of the block of the cover image. For the medium security requirement, in response to a determination that the total number of 1's in the in 6th, 7th, and 8th bit positions of the cover image pixel is 2, the biometric template bits of the biometric template may be embedded in 1st, and if a counter value for a 5th bit position of the cover image pixel of the block of the cover image is less than the threshold value, then in the 5th bit position of the cover image pixel of the block of the cover image, and otherwise in the 3rd bit position of the cover image pixel of the block of the cover image. For the medium security requirement, in response to a determination that the total number of 1's in the in 6th, 7th, and 8th bit positions of the cover image pixel is 3, the biometric template bits of the biometric template may be embedded in 1st and 2nd bit positions of the cover image pixel of the block of the cover image, and if the counter value for the 5th bit position of the cover image pixel of the block of the cover image is less than the threshold value, then in the 5th bit position of the cover image pixel of the block of the cover image, and otherwise in the 3rd bit position of the cover image pixel of the block of the cover image.

According to an example, the method 800 may further include embedding biometric template bits of the biometric template in appropriate bit positions of a cover image pixel of a block of the cover image based on determination of a total number of 1's in 6th, 7th, and 8th bit positions of the cover image pixel that is divided into a least part that includes bits 1-4 and a most part that includes bits 5-8. For a low security requirement, in response to a determination that the total number of 1's in the 6th, 7th, and 8th bit positions of the cover image pixel is 0 or 1, the biometric template bits of the biometric template may be embedded in 1st and 2nd bit positions of the cover image pixel of the block of the cover image. In response to a determination that the total number of 1's in the 6th, 7th, and 8th bit positions of the cover image pixel is 2, the biometric template bits of the biometric template may be embedded in 1st, 2nd, and 3rd bit positions of the cover image pixel of the block of the cover image. In response to a determination that the total number of 1's in the 6th, 7th, and 8th bit positions of the cover image pixel is 3, the biometric template bits of the biometric template may be embedded in 1st, 2nd, and 4th bit positions of the cover image pixel of the block of the cover image.

According to an example, for a cover image pixel that is divided into a least part that includes bits 1-4 and a most part that includes bits 5-8, the cover image intensity associated with a 5th bit position is based on a percentage of cover image pixels that are in an intensity range of 96-255 based on an intensity scale of 0-255, and the cover image intensity associated with a 6th bit position is based on a percentage of cover image pixels that are in an intensity range of 192-255 based on the intensity scale of 0-255.

Referring to Figure 1 and 9, at block 902, the method 900 may include receiving an image and a biometric template for a person.

At block 904, the method 900 may include determining, by a processor, at least one threshold value for embedding biometric template bits of the biometric template in 5th or 6th bit positions of an image pixel of the image. According to an example, the image pixel of the image is divisible into 8 bits, and a pixel intensity of the image pixel increases from bit 1 to bit 8.

According to an example, the method 900 may further include embedding the biometric template bits of the biometric template for the person in the image to generate a biometric profile for the person, and verifying (e.g., by the verification module 122) an identity of an unknown person by comparing (e.g., as described herein with reference to Figure 7) a biometric template for the unknown person to the biometric template from the biometric profile for the person. Verifying an identity of an unknown person by comparing a biometric template for the unknown person to the biometric template from the biometric profile for the person may further include generating a score based on the comparison of the biometric template for the unknown person to the biometric template from the biometric profile for the person, and determining whether the score exceeds a predetermined score threshold.

According to an example, the method 900 may further include embedding the biometric template bits of the biometric template for the person in the image to generate a biometric profile for the person, with the biometric profile for the person being a same size as the image.

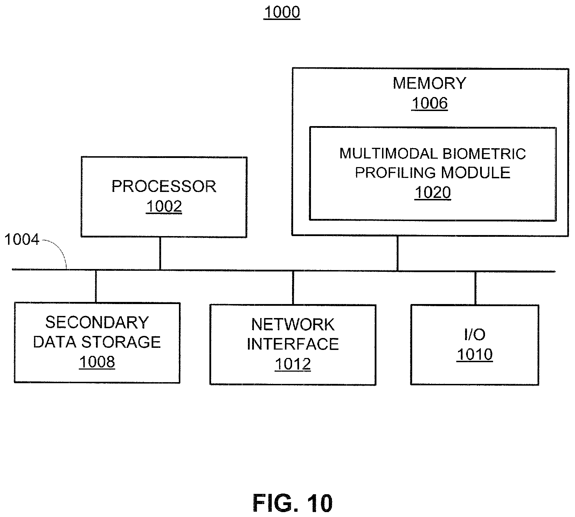

Figure 10 shows a computer system 1000 that may be used with the examples described herein. The computer system may represent a generic platform that includes components that may be in a server or another computer system. The computer system 1000 may be used as a platform for the system 100. The computer system 1000 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 1000 may include a processor 1002 that may implement or execute machine readable instructions performing some or all of the methods, functions and other processes described herein. Commands and data from the processor 1002 may be communicated over a communication bus 1004. The computer system may also include a main memory 1006, such as a random access memory (RAM), where the machine readable instructions and data for the processor 1002 may reside during runtime, and a secondary data storage 1008, which may be non-volatile and stores machine readable instructions and data. The memory and data storage are examples of computer readable mediums. The memory 1006 may include a multimodal biometric profiling module 1020 including machine readable instructions residing in the memory 1006 during runtime and executed by the processor 1002. The multimodal biometric profiling module 1020 may include the modules of the system 100 shown in Figure 1.

The computer system 1000 may include an I/O device 1010, such as a keyboard, a mouse, a display, etc. The computer system may include a network interface 1012 for connecting to a network. Other known electronic components may be added or substituted in the computer system.

What has been described and illustrated herein is an example along with some of its variations. The terms, descriptions and figures used herein are set forth by way of illustration only and are not meant as limitations.

## Claims

1. A multimodal biometric profiling system (100) comprising:

   at least one processor;
   an input module (102), executed by the at least one processor, to receive a cover image (104) of a person and a biometric template (106) of the person;

a security requirement determination module (108), executed by the at least one processor, to receive an indication of a security requirement related to biometric profiling for the person;

a threshold determination module (110), executed by the at least one processor, to determine a threshold value based on the indicated security requirement, wherein the threshold value is to limit a number of biometric template bits of the biometric template (106) that are embedded in a predetermined bit position of a cover image pixel of the cover image (104) based on cover image intensity associated with the predetermined bit position; and

a biometric template bit embedding module (118) to generate an embedded cover image (120) by embedding the biometric template (106) in the cover image (104);

wherein the limit on the number of biometric template bits of the biometric template (106) that are embedded in the predetermined bit position of the cover image pixel of the cover image (104) includes a determination of whether the cover image intensity indicates a high intensity cover image or a low intensity cover image;

wherein for a cover image pixel that is divided into a least part that includes bits 1-4 and a most part that includes bits 5-8,

for the high intensity cover image, a maximum percentage of the cover image pixels that can be considered for embedding in the $6^{th}$ bit position is $H_6T_{min}$ to $H_6T_{max}$, and

for the low intensity cover image, a maximum percentage of the cover image pixels that can be considered for embedding in the $6^{th}$ bit position is $L_6T_{min}$ to $L_6T_{max}$,

wherein $H_6T_{min}$, $H_6T_{max}$, $L_6T_{min}$, and $L_6T_{max}$ are parameters that are based on a category of the cover image (104) and

wherein $H_6T_{min}$, $H_6T_{max}$, $L_6T_{min}$, and $L_6T_{max}$ are 63%, 67%, 8%, and 11%, respectively.

2. The multimodal biometric profiling system (100) according to claim 1, wherein the security requirement includes one of high security (202), medium security (204), and low security (206), and a different security requirement corresponds to a different application of the multimodal biometric profiling system (100) and/or

wherein the threshold value for a high security requirement is different from the threshold value for a medium security requirement.

3. The multimodal biometric profiling system (100) according to claim 1, wherein for a cover image pixel that is divided into a least part that includes bits 1-4 and a most part that includes bits 5-8,

for the high intensity cover image, a maximum percentage of the cover image pixels that can be considered for embedding in the $5^{th}$ bit position is $H_5T_{min}$ to $H_5T_{max}$, and

for the low intensity cover image, a maximum percentage of the cover image pixels that can be considered for embedding in the $5^{th}$ bit position is $L_5T_{min}$ to $L_5T_{max}$,

wherein $H_5T_{min}$, $H_5T_{max}$, $L_5T_{min}$, and $L_5T_{max}$ are parameters that are based on a category of the cover image and

wherein preferably $H_5T_{min}$, $H_5T_{max}$, $L_5T_{min}$, and $L_5T_{max}$ are 42%, 46%, 18%, and 21%, respectively.

4. The multimodal biometric profiling system (100) according to any one of claims 1 to 3, further comprising:

a cover image partition module (114), executed by the at least one processor, to partition (606) the cover image (104) into a plurality of predetermined blocks;

a random sequence generation module (116), executed by the at least one processor, to generate (608) a random sequence to randomize selection of cover image pixels of at least one of the blocks of the cover image (104); and

wherein the biometric template bit embedding module (118), executed by the at least one processor, is to embed (612) a biometric template bit of the biometric template (106) in an appropriate bit position of a cover image pixel of the at least one of the blocks of the cover image (104) based on a total number of 1's in predetermined bit positions of the cover image pixel of the at least one of the blocks according to the randomized selection of the cover image pixels of the at least one of the blocks of the cover image (104).

5. The multimodal biometric profiling system (100) according to claim 4, wherein for a cover image pixel that is divided into a least part that includes bits 1-4 and a most part that includes bits 5-8,

the predetermined bit positions of the cover image pixel include the $7^{th}$ and $8^{th}$ bit positions of the cover image pixel or the predetermined bit positions of the cover image pixel include the $6^{th}$, $7^{th}$, and $8^{th}$ bit positions of the cover image pixel.

6. The multimodal biometric profiling system (100) according to any one of claims 1 to 3, wherein the biometric template bit embedding module (118), executed by the at least one processor, is to embed (612) biometric template bits of the biometric template in appropriate bit positions of a cover image pixel of a block of the cover image (104) based on determination of a total number of 1's in $7^{th}$ and $8^{th}$ bit positions of the cover image pixel that is divided into a least part that includes bits 1-4 and a most part that includes bits 5-8, wherein for a high security requirement,

in response to a determination that the total number of 1's in the $7^{th}$ and $8^{th}$ bit positions of the cover image pixel is 0, the biometric template bit embedding module (118) is to embed the biometric template bits of the biometric template (106) in $1^{st}$ and $2^{nd}$ bit positions of the cover image pixel of the block of the cover image (104), in response to a determination that the total number of 1's in the $7^{th}$ and $8^{th}$ bit positions of the cover image pixel is 1, the biometric template bit embedding module (118) is to embed the biometric template bits of the biometric template (106) in $1^{st}$, $2^{nd}$, and $3^{rd}$ bit positions of the cover image pixel of the block of the cover image (104), and
in response to a determination that the total number of 1's in the $7^{th}$ and $8^{th}$ bit positions of the cover image pixel is 2, the biometric template bit embedding module (118) is to embed the biometric template bits of the biometric template (106) in $1^{st}$, and if a counter value for a $6^{th}$ bit position of the cover image pixel of the block of the cover image (104) is less than the threshold value, then in the $6^{th}$ bit position of the cover image pixel of the block of the cover image (104), and otherwise in the $2^{nd}$ bit position of the cover image pixel of the block of the cover image (104).

7.  The multimodal biometric profiling system (100) according to any one of claims 1 to 3, wherein
the biometric template bit embedding module (118), executed by the at least one processor, is to embed biometric template bits of the biometric template (106) in appropriate bit positions of a cover image pixel of a block of the cover image (104) based on determination of a total number of 1's in $6^{th}$, $7^{th}$, and $8^{th}$ bit positions of the cover image pixel that is divided into a least part that includes bits 1-4 and a most part that includes bits 5-8, wherein for a medium security requirement,

in response to a determination that the total number of 1's in the in $6^{th}$, $7^{th}$, and $8^{th}$ bit positions of the cover image pixel is 0, the biometric template bit embedding module (118) is to embed the biometric template bits of the biometric template (106) in $1^{st}$ and $2^{nd}$ bit positions of the cover image pixel of the block of the cover image (104),
in response to a determination that the total number of 1's in the in $6^{th}$, $7^{th}$, and $8^{th}$ bit positions of the cover image pixel is 1, the biometric template bit embedding module (118) is to embed the biometric template bits of the biometric template (106) in $1^{st}$, $2^{nd}$, and $3^{rd}$ bit positions of the cover image pixel of the block of the cover image (104),
in response to a determination that the total number of 1's in the in $6^{th}$, $7^{th}$, and $8^{th}$ bit positions of the cover image pixel is 2, the biometric template bit embedding module (118) is to embed the biometric template bits of the biometric template (106) in $1^{st}$, and if a counter value for a $5^{th}$ bit position of the cover image pixel of the block of the cover image (104) is less than the threshold value, then in the $5^{th}$ bit position of the cover image pixel of the block of the cover image (104), and otherwise in the $3^{rd}$ bit position of the cover image pixel of the block of the cover image (104), and
in response to a determination that the total number of 1's in the in $6^{th}$, $7^{th}$, and $8^{th}$ bit positions of the cover image pixel is 3, the biometric template bit embedding module (118) is to embed the biometric template bits of the biometric template (106) in $1^{st}$ and $2^{nd}$ bit positions of the cover image pixel of the block of the cover image (104), and if the counter value for the $5^{th}$ bit position of the cover image pixel of the block of the cover image (104) is less than the threshold value, then in the $5^{th}$ bit position of the cover image pixel of the block of the cover image (104), and otherwise in the $3^{rd}$ bit position of the cover image pixel of the block of the cover image (104).

8.  The multimodal biometric profiling system (100) according to any one of claims 1 to 3, wherein
the biometric template bit embedding module (118), executed by the at least one processor, is to embed biometric template bits of the biometric template (106) in appropriate bit positions of a cover image pixel of a block of the cover image (104) based on determination of a total number of 1's in $6^{th}$, $7^{th}$, and $8^{th}$ bit positions of the cover image pixel that is divided into a least part that includes bits 1-4 and a most part that includes bits 5-8, wherein for a low security requirement,

in response to a determination that the total number of 1's in the $6^{th}$, $7^{th}$, and $8^{th}$ bit positions of the cover image pixel is 0 or 1, the biometric template bit embedding module (118) is to embed the biometric template bits of the biometric template (106) in $1^{st}$ and $2^{nd}$ bit positions of the cover image pixel of the block of the cover image (104),

in response to a determination that the total number of 1's in the 6th, 7th, and 8th bit positions of the cover image pixel is 2, the biometric template bit embedding module (118) is to embed the biometric template bits of the biometric template (106) in 1st, 2nd, and 3rd bit positions of the cover image pixel of the block of the cover image (104), and

in response to a determination that the total number of 1's in the 6th, 7th, and 8th bit positions of the cover image pixel is 3, the biometric template bit embedding module (118) is to embed the biometric template bits of the biometric template (106) in 1st, 2nd, and 4th bit positions of the cover image pixel of the block of the cover image (104).

9. The multimodal biometric profiling system (100) according to any one of claims 1 to 8, wherein for a cover image pixel that is divided into a least part that includes bits 1-4 and a most part that includes bits 5-8, the cover image intensity associated with a 5th bit position is based on a percentage of cover image pixels that are in an intensity range of 96-255 based on an intensity scale of 0-255, and the cover image intensity associated with a 6th bit position is based on a percentage of cover image pixels that are in an intensity range of 192-255 based on the intensity scale of 0-255.

10. A method (900) for multimodal biometric profiling, the method comprising:

receiving (902) an image of a person and a biometric template (106) of the person;
determining (904), by a processor, at least one threshold value for embedding biometric template bits of the biometric template (106) in one of 5th and 6th bit positions of an image pixel of the image, wherein the threshold value is to limit a number of biometric template bits of the biometric template (106) that are embedded in a predetermined bit position of a cover image pixel of the cover image (104) based on cover image intensity associated with the predetermined bit position, and wherein the image pixel of the image is divisible into 8 bits, and a pixel intensity of the image pixel increases from bit 1 to bit 8; and
generating an embedded cover image (120) by embedding the biometric template (106) in the cover image (104);
wherein the limit on the number of biometric template bits of the biometric template (106) that are embedded in the predetermined bit position of the cover image pixel of the cover image (104) includes a determination of whether the cover image intensity indicates a high intensity cover image or a low intensity cover image;
wherein for a cover image pixel that is divided into a least part that includes bits 1-4 and a most part that includes bits 5-8,
for the high intensity cover image, a maximum percentage of the cover image pixels that can be considered for embedding in the 6th bit position is $H_6T_{min}$ to $H_6T_{max}$, and
for the low intensity cover image, a maximum percentage of the cover image pixels that can be considered for embedding in the 6th bit position is $L_6T_{min}$ to $L_6T_{max}$,
wherein $H_6T_{min}$, $H_6T_{max}$, $L_6T_{min}$, and $L_6T_{max}$ are parameters that are based on a category of the cover image (104) and
wherein $H_6T_{min}$, $H_6T_{max}$, $L_6T_{min}$, and $L_6T_{max}$ are 63%, 67%, 8%, and 11%, respectively.

11. The method for multimodal biometric profiling according to claim 10, further comprising:

embedding the biometric template bits of the biometric template (106) for the person in the image to generate a biometric profile for the person; and
verifying (714) an identity of an unknown person by comparing a biometric template for the unknown person to the biometric template (106) from the biometric profile for the person, and

wherein verifying (714) an identity of an unknown person by comparing a biometric template for the unknown person to the biometric template (106) from the biometric profile for the person further preferably comprises:

generating a score based on the comparison of the biometric template for the unknown person to the biometric template (106) from the biometric profile for the person; and
determining whether the score exceeds a predetermined score threshold.

12. A non-transitory computer readable medium having stored thereon machine readable instructions for multimodal biometric profiling, the machine readable instructions when executed cause a processor to:

receive an image of a person and a biometric template (106) of the person to be embedded in the image;
determine at least one threshold value based on the image for limiting embedding of template bits of the template in at least one predetermined bit position of an image pixel of the image, wherein the threshold value is to limit a number of biometric template bits of the biometric template (106) that are embedded in a predetermined bit position of a cover image pixel of the cover image (104) based on cover image intensity associated with the predetermined bit position; and

generate an embedded cover image (120) by embedding the biometric template (106) in the cover image (104); wherein the limit on the number of biometric template bits of the biometric template (106) that are embedded in the predetermined bit position of the cover image pixel of the cover image (104) includes a determination of whether the cover image intensity indicates a high intensity cover image or a low intensity cover image;

wherein for a cover image pixel that is divided into a least part that includes bits 1-4 and a most part that includes bits 5-8,

for the high intensity cover image, a maximum percentage of the cover image pixels that can be considered for embedding in the $6^{th}$ bit position is $H_6T_{min}$ to $H_6T_{max}$, and

for the low intensity cover image, a maximum percentage of the cover image pixels that can be considered for embedding in the $6^{th}$ bit position is $L_6T_{min}$ to $L_6T_{max}$,

wherein $H_6T_{min}$, $H_6T_{max}$, $L_6T_{min}$, and $L_6T_{max}$ are parameters that are based on a category of the cover image (104) and

wherein $H_6T_{min}$, $H_6T_{max}$, $L_6T_{min}$, and $L_6T_{max}$ are 63%, 67%, 8%, and 11%, respectively.

**13.** The non-transitory computer readable medium of claim 12, further comprising machine readable instructions, when executed, further cause the processor to:

embed the template bits of the template in the image to generate a profile, wherein the profile is a same size as the image.

**Patentansprüche**

**1.** Ein System zur multimodalen biometrischen Profilerstellung (100), das Folgendes umfasst:

mindestens einen Prozessor;

ein Eingabemodul (102), das von dem mindestens einen Prozessor ausgeführt wird, um ein Coverbild (104) einer Person und eine biometrische Vorlagen-Datei bzw. ein biometrisches Template (106) der Person zu empfangen;

ein Sicherheitsanforderungen-Bestimmungsmodul (108), das von dem mindestens einen Prozessor ausgeführt wird, um eine Angabe zu einer Sicherheitsanforderung im Zusammenhang mit der biometrischen Profilerstellung für die Person zu erhalten;

ein Schwellenwert-Bestimmungsmodul (110), das von dem mindestens einen Prozessor ausgeführt wird, um einen Schwellenwert zu bestimmen, basierend auf der angegebenen Sicherheitsanforderung, wobei der Schwellenwert eine Anzahl von biometrischen Template-Bits des biometrischen Templates (106) begrenzen soll, die an einer vorbestimmten Bitposition eines Coverbild-Pixels des Coverbildes (104) eingebettet sind, basierend auf der Coverbild-Intensität, die der vorbestimmten Bitposition zugeordnet ist; und

ein biometrisches Template-Bit-Einbettungsmodul (118), um ein eingebettetes Coverbild (120) zu erzeugen, indem das biometrische Template (106) in das Coverbild (104) eingebettet wird;

wobei die Grenze bei der Anzahl der biometrischen Template-Bits des biometrischen Templates (106), die an der vorbestimmten Bitposition des Coverbild-Pixels des Coverbildes (104) eingebettet sind, eine Feststellung beinhaltet, ob die Intensität des Coverbildes ein Coverbild hoher Intensität oder ein Coverbild niedriger Intensität angibt;

wobei, für ein Coverbild-Pixel, das unterteilt ist in einen kleinsten Teil (*leastpart*), der die Bits 1 - 4 beinhaltet, und einen größten Teil (*most part*), der die Bits 5 - 8 beinhaltet,

für das Coverbild hoher Intensität, ein maximaler Prozentsatz der Coverbild-Pixel, die für die Einbettung an der 6. Bitposition in Betracht gezogen werden können, $H_6T_{min}$ bis $H_6T_{max}$ beträgt, und

für das Coverbild niedriger Intensität, ein maximaler Prozentsatz der Pixel des Coverbildes, die für die Einbettung an der 6. Bitposition in Betracht gezogen werden können, $L_6T_{min}$ bis $L_6T_{max}$ beträgt,

wobei $H_6T_{min}$, $H_6T_{max}$, $L_6T_{min}$ und $L_6T_{max}$ Parameter sind, die auf einer Kategorie des Coverbildes (104) basieren und

wobei $H_6T_{min}$, $H_6T_{max}$, $L_6T_{min}$ und $L_6T_{max}$ entsprechend 63%, 67%, 8% und 11% betragen.

**2.** Das System zur multimodalen biometrischen Profilerstellung (100) nach Anspruch 1, wobei die Sicherheitsanforderung eine der Folgenden beinhaltet: eine hohe Sicherheit (202), eine mittlere Sicherheit (204) und eine geringe Sicherheit (206), und wobei eine andere Sicherheitsanforderung einer anderen Anwendung des Systems zur multimodalen biometrischen Profilerstellung (100) entspricht und/oder
wobei sich der Schwellenwert für eine hohe Sicherheitsanforderung vom Schwellenwert für eine mittlere Sicherheitsanforderung unterscheidet.

3. Das System zur multimodalen biometrischen Profilerstellung (100) nach Anspruch 1, wobei für ein Cover-Bild Pixel, das unterteilt ist in einen kleinsten Teil, der die Bits 1 - 4 beinhaltet, und einen größten Teil, der die Bits 5 - 8 beinhaltet, für das Coverbild hoher Intensität, ein maximaler Prozentsatz der Coverbild-Pixel, die für die Einbettung an der 5. Bitposition in Betracht gezogen werden können, $H_5T_{min}$ bis $H_5T_{max}$ beträgt, und
für das Coverbild niedriger Intensität, ein maximaler Prozentsatz der Pixel des Coverbildes, die für die Einbettung an der 5. Bitposition in Betracht gezogen werden können, $L_5T_{min}$ bis $L_5T_{max}$ beträgt,
wobei $H_5T_{min}$, $H_5T_{max}$, $L_5T_{min}$ und $L_5T_{max}$ Parameter sind, die auf einer Kategorie des Coverbildes basieren und wobei vorzugsweise $H_5T_{min}$, $H_5T_{max}$, $L_5T_{min}$ und $L_5T_{max}$ entsprechend 42%, 46%, 18% bzw. 21% betragen.

4. Das System zur multimodalen biometrischen Profilerstellung (100) nach irgendeinem der Ansprüche von 1 bis 3, das ferner Folgendes umfasst:

ein Coverbild-Aufteilungsmodul (114), das von dem mindestens einen Prozessor ausgeführt wird, um das Coverbild (104) in eine Vielzahl von vorbestimmten Blöcken aufzuteilen (606);
ein Zufallssequenz-Erzeugungsmodul (116), das von dem mindestens einen Prozessor zur Erzeugung (608) einer Zufallssequenz ausgeführt wird, um die Auswahl von Coverbild-Pixeln von mindestens einem der Blöcke des Coverbildes (104) zu randomisieren; und
wobei das biometrische Template-Bit-Einbettungsmodul (118), das durch den mindestens einen Prozessor ausgeführt wird, ein biometrisches Template-Bit des biometrischen Templates (106) an einer geeigneten Bitposition eines Coverbild-Pixels des mindestens einen der Blöcke des Coverbildes (104) einbetten (612) soll, basierend auf einer Gesamtzahl von 1 en an vorbestimmten Bitpositionen des Coverbild-Pixels des mindestens einen der Blöcke gemäß der randomisierten Auswahl der Coverbild-Pixel des mindestens einen der Blöcke des Coverbildes (104).

5. Das System zur multimodalen biometrischen Profilerstellung (100) nach Anspruch 4, wobei für ein Coverbild-Pixel, das in einen kleinsten Teil, der die Bits 1 - 4 beinhaltet, und einen größten Teil, der die Bits 5 - 8 beinhaltet, unterteilt ist, die vorbestimmten Bitpositionen des Coverbild-Pixels die 7. und 8. Bitposition des Coverbild-Pixels beinhalten oder die vorbestimmten Bitpositionen des Coverbild-Pixels die 6., 7. und 8. Bitpositionen des Coverbild-Pixels beinhalten.

6. Das System zur multimodalen biometrischen Profilerstellung (100) nach irgendeinem der Ansprüche von 1 bis 3, wobei
das biometrische Template-Bit-Einbettungsmodul (118), das von dem mindestens einen Prozessor ausgeführt wird, biometrische Template-Bits des biometrischen Templates an geeigneten Bitpositionen eines Coverbild-Pixels eines Blocks des Coverbildes (104) einbetten (612) soll, basierend auf der Feststellung einer Gesamtzahl von 1en an der 7. und 8. Bitposition des Coverbild-Pixels, das in einen kleinsten Teil, der die Bits 1 - 4 enthält, und einen größten Teil unterteilt ist, der Bits 5 - 8 enthält, wobei für eine hohe Sicherheitsanforderung,
als Reaktion auf eine Feststellung, dass die Gesamtzahl der 1en an der 7. und 8. Bitposition des Coverbild-Pixels 0 ist, das biometrische Template-Bit-Einbettungsmodul (118) die biometrischen Template-Bits des biometrischen Templates (106) an der 1. und 2. Bitposition des Coverbild-Pixels des Blocks des Coverbildes (104) einbetten soll,
als Reaktion auf eine Feststellung, dass die Gesamtzahl der 1en an der 7. und 8. Bitposition des Coverbild-Pixels 1 ist, das biometrische Template-Bit-Einbettungsmodul (118) die biometrischen Template-Bits des biometrischen Templates (106) an der 1., 2. und 3. Bitposition des Coverbild-Pixels des Blocks des Coverbildes (104) einbetten soll, und
als Reaktion auf eine Feststellung, dass die Gesamtzahl der 1en an der 7. und 8. Bitposition des Coverbild-Pixels 2 ist, das biometrische Template-Bit-Einbettungsmodul (118) die biometrischen Template-Bits des biometrischen Templates (106) an der 1., und falls ein Zählerwert für eine 6. Bitposition des Coverbild-Pixels des Blocks des Coverbildes (104) kleiner als der Schwellenwert ist, dann an der 6. Bitposition des Coverbild-Pixels des Blocks des Coverbildes (104), und ansonsten an der 2. Bitposition des Coverbild-Pixels des Blocks des Coverbildes (104) einbetten soll.

7. Das System zur multimodalen biometrischen Profilerstellung (100) nach irgendeinem der Ansprüche 1 bis 3, wobei das biometrische Template-Bit-Einbettungsmodul (118), das von dem mindestens einen Prozessor ausgeführt wird, biometrische Template-Bits des biometrischen Templates (106) an geeigneten Bitpositionen eines Coverbild-Pixels eines Blocks des Coverbildes (104) einbetten soll, basierend auf der Feststellung einer Gesamtzahl von 1en an der 6., 7. und 8. Bitposition des Coverbild-Pixels, das in einen kleinsten Teil, der die Bits 1 - 4 enthält, und einen größten Teil unterteilt ist, der Bits 5 - 8 enthält, wobei für eine mittlere Sicherheitsanforderung,

als Reaktion auf eine Feststellung, dass die Gesamtzahl der 1en an der 6., 7. und 8. Bitposition des Coverbild-Pixels 0 ist, das biometrische Template-Bit-Einbettungsmodul (118) die biometrischen Template-Bits des biometrischen Templates (106) an der 1. und 2. Bitposition des Coverbild-Pixels des Blocks des Coverbildes (104) einbetten soll,

als Reaktion auf eine Feststellung, dass die Gesamtzahl der 1en an der 6., 7. und 8. Bitposition des Coverbild-Pixels 1 ist, das biometrische Template-Bit-Einbettungsmodul (118) die biometrischen Template-Bits des biometrischen Templates (106) an der 1., 2. und 3. Bitposition des Coverbild-Pixels des Blocks des Coverbildes (104) einbetten soll,

als Reaktion auf eine Feststellung, dass die Gesamtzahl der 1en an der 6., 7. und 8. Bitposition des Coverbild-Pixels 2 ist, das biometrische Template-Bit-Einbettungsmodul (118) die biometrischen Template-Bits des biometrischen Templates (106) an der 1., und falls ein Zählerwert für eine 5. Bitposition des Coverbild-Pixels des Blocks des Coverbildes (104) kleiner als der Schwellenwert ist, dann an der 5. Bitposition des Coverbild-Pixels des Blocks des Coverbildes (104), und ansonsten an der 3. Bitposition des Coverbild-Pixels des Blocks des Coverbildes (104) einbetten soll, und

als Reaktion auf eine Feststellung, dass die Gesamtzahl der 1en an der 6., 7. und 8. Bitposition des Coverbild-Pixels 3 ist, das biometrische Template-Bit-Einbettungsmodul (118) die biometrischen Template-Bits des biometrischen Templates (106) an der 1. und 2. Bitposition des Coverbild-Pixels des Blocks des Coverbildes (104) einbetten soll, und falls ein Zählerwert für eine 5. Bitposition des Coverbild-Pixels des Blocks des Coverbildes (104) kleiner als der Schwellenwert ist, dann an der 5. Bitposition des Coverbild-Pixels des Blocks des Coverbildes (104), und ansonsten an der 3. Bitposition des Coverbild-Pixels des Blocks des Coverbildes (104) einbetten soll.

8. Das System zur multimodalen biometrischen Profilerstellung (100) nach irgendeinem der Ansprüche von 1 bis 3, wobei

das biometrische Template-Bit-Einbettungsmodul (118), das von dem mindestens einen Prozessor ausgeführt wird, biometrische Template-Bits des biometrischen Templates (106) an geeigneten Bitpositionen eines Coverbild-Pixels eines Blocks des Coverbildes (104) einbetten soll, basierend auf der Feststellung einer Gesamtzahl von 1en an der 6., 7. und 8. Bitposition des Coverbild-Pixels, das in einen kleinsten Teil, der die Bits 1 - 4 enthält, und einen größten Teil unterteilt ist, der Bits 5 - 8 enthält, wobei für eine niedrige Sicherheitsanforderung,

als Reaktion auf eine Feststellung, dass die Gesamtzahl der 1en an der 6., 7. und 8. Bitposition des Coverbild-Pixels 0 oder 1 ist, das biometrische Template-Bit-Einbettungsmodul (118) die biometrischen Template-Bits des biometrischen Templates (106) an der 1. und 2. Bitposition des Coverbild-Pixels des Blocks des Coverbildes (104) einbetten soll,

als Reaktion auf eine Feststellung, dass die Gesamtzahl der 1en an der 6., 7. und 8. Bitposition des Coverbild-Pixels 2 ist, das biometrische Template-Bit-Einbettungsmodul (118) die biometrischen Template-Bits des biometrischen Templates (106) an der 1., 2. und 3. Bitposition des Coverbild-Pixels des Blocks des Coverbildes (104) einbetten soll, und

als Reaktion auf eine Feststellung, dass die Gesamtzahl der 1en an der 6., 7. und 8. Bitposition des Coverbild-Pixels 3 ist, das biometrische Template-Bit-Einbettungsmodul (118) die biometrischen Template-Bits des biometrischen Templates (106) an der 1., 2. und 4. Bitposition des Coverbild-Pixels des Blocks des Coverbildes (104) einbetten soll.

9. Das System zur multimodalen biometrischen Profilerstellung (100) nach irgendeinem der Ansprüche 1 bis 8, wobei für ein Coverbild-Pixel, das in einen kleinsten Teil, der die Bits 1 - 4 enthält, und einen größten Teil unterteilt ist, der Bits 5 - 8 enthält,

die einer 5. Bit-Position zugeordnete Coverbild-Intensität auf einem Prozentsatz von Coverbild-Pixeln beruht, die, basierend auf einer Intensitätsskala von 0 - 255, in einem Intensitätsbereich von 96 - 255 liegen, und

die einer 6. Bitposition zugeordnete Coverbild-Intensität auf einem Prozentsatz von Coverbild-Pixeln beruht, die, basierend auf der Intensitätsskala von 0-255, in einem Intensitätsbereich von 192-255 liegen.

10. Ein Verfahren (900) zur multimodalen biometrischen Profilerstellung, wobei das Verfahren Folgendes umfasst:

Empfangen (902) eines Bildes einer Person und eines biometrischen Templates (106) der Person;
Bestimmen (904), durch einen Prozessor, mindestens eines Schwellenwerts zum Einbetten biometrischer Template-Bits des biometrischen Templates (106) in eine der Bitpositionen 5 und 6 eines Bildpixels des Bildes, wobei der Schwellenwert eine Anzahl von biometrischen Template-Bits des biometrischen Templates (106) begrenzen soll, die an einer vorbestimmten Bitposition eines Coverbild-Pixels des Coverbildes (104) eingebettet sind, basierend auf der der vorbestimmten Bitposition zugeordneten Coverbild-Intensität, und wobei das Bildpixel des Bildes in 8 Bit teilbar ist, und eine Pixel-Intensität des Bildpixels von Bit 1 auf Bit 8 ansteigt; und
Erzeugen eines eingebetteten Coverbildes (120) durch Einbetten des biometrischen Templates (106) in das Coverbild (104);
wobei die Grenze bei der Anzahl der biometrischen Template-Bits des biometrischen Templates (106), die an der vorbestimmten Bitposition des Coverbild-Pixels des Coverbildes (104) eingebettet sind, eine Feststellung beinhaltet, ob die Intensität des Coverbildes ein Coverbild hoher Intensität oder ein Coverbild niedriger Intensität angibt;
wobei, für ein Coverbild-Pixel, das unterteilt ist in einen kleinsten Teil (*least part*), der die Bits 1 - 4 beinhaltet, und einen größten Teil (*most part*), der die Bits 5 - 8 beinhaltet,
für das Coverbild hoher Intensität, ein maximaler Prozentsatz der Coverbild-Pixel, die für die Einbettung an der 6. Bitposition in Betracht gezogen werden können, $H_6T_{min}$ bis $H_6T_{max}$ beträgt, und
für das Coverbild niedriger Intensität, ein maximaler Prozentsatz der Pixel des Coverbildes, die für die Einbettung an der 6. Bitposition in Betracht gezogen werden können, $L_6T_{min}$ bis $L_6T_{max}$ beträgt,
wobei $H_6T_{min}$, $H_6T_{max}$, $L_6T_{min}$ und $L_6T_{max}$ Parameter sind, die auf einer Kategorie des Coverbildes (104) basieren und
wobei $H_6T_{min}$, $H_6T_{max}$, $L_6T_{min}$ und $L_6T_{max}$ entsprechend 63%, 67%, 8% und 11% betragen.

**11.** Das Verfahren zur multimodalen biometrischen Profilerstellung nach Anspruch 10, das ferner Folgendes umfasst:

Einbetten der biometrischen Template-Bits des biometrischen Templates (106) für die Person in das Bild, um ein biometrisches Profil für die Person zu erzeugen; und
Überprüfen (714) der Identität einer unbekannten Person durch Vergleichen eines biometrischen Templates für die unbekannte Person mit dem biometrischen Template (106) aus dem biometrischen Profil für die Person, und
wobei das Überprüfen (714) der Identität einer unbekannten Person durch Vergleichen eines biometrischen Templates für die unbekannte Person mit des biometrischen Templates (106) aus dem biometrischen Profil für die Person ferner vorzugsweise Folgendes umfasst:

Erzeugen einer Bewertung (*score*) basierend auf dem Vergleich des biometrischen Templates für die unbekannte Person mit dem biometrischen Template (106) aus dem biometrischen Profil für die Person; und
Bestimmen, ob die Bewertung einen vorbestimmten Bewertungs-Schwellenwert überschreitet.

**12.** Ein nichtflüchtiges, computerlesbares Medium, auf dem maschinenlesbare Anweisungen zur multimodalen biometrischen Profilerstellung gespeichert sind, wobei die maschinenlesbaren Anweisungen, wenn sie ausgeführt werden, einen Prozessor dazu veranlassen, Folgendes zu bewerkstelligen:

Empfangen eines Bildes einer Person und eines biometrischen Templates (106) der Person, um es in das Bild einzubetten;
Bestimmen mindestens eines Schwellenwerts, basierend auf dem Bild, zum Begrenzen der Einbettung von Template-Bits des Templates an mindestens einer vorgegebenen Bitposition eines Bildpixels des Bildes, wobei der Schwellenwert eine Anzahl von biometrischen Template-Bits des biometrischen Templates (106) begrenzen soll, die an einer vorbestimmten Bitposition eines Coverbild-Pixels des Coverbildes (104) eingebettet sind, basierend auf der der vorbestimmten Bitposition zugeordneten Coverbild-Intensität, und
Erzeugen eines eingebetteten Coverbildes (120) durch Einbetten des biometrischen Templates (106) in das Coverbild (104);
wobei die Grenze bei der Anzahl der biometrischen Template-Bits des biometrischen Templates (106), die an der vorbestimmten Bitposition des Coverbild-Pixels des Coverbildes (104) eingebettet sind, eine Feststellung beinhaltet, ob die Intensität des Coverbildes ein Coverbild hoher Intensität oder ein Coverbild niedriger Intensität angibt;
wobei, für ein Coverbild-Pixel, das unterteilt ist in einen kleinsten Teil (*least part*), der die Bits 1 - 4 beinhaltet, und einen größten Teil (*most part*), der die Bits 5 - 8 beinhaltet,
für das Coverbild hoher Intensität, ein maximaler Prozentsatz der Coverbild-Pixel, die für die Einbettung an der 6. Bitposition in Betracht gezogen werden können, $H_6T_{min}$ bis $H_6T_{max}$ beträgt, und
für das Coverbild niedriger Intensität, ein maximaler Prozentsatz der Pixel des Coverbildes, die für die Einbettung an der 6. Bitposition in Betracht gezogen werden können, $L_6T_{min}$ bis $L_6T_{max}$ beträgt,
wobei $H_6T_{min}$, $H_6T_{max}$, $L_6T_{min}$ und $L_6T_{max}$ Parameter sind, die auf einer Kategorie des Coverbildes (104) basieren

und

wobei $H_6T_{min}$, $H_6T_{max}$, $L_6T_{min}$ und $L_6T_{max}$ entsprechend 63%, 67%, 8% und 11% betragen.

**13.** Das nichtflüchtige, computerlesbare Medium nach Anspruch 12, das ferner maschinenlesbare Anweisungen umfasst, die, wenn sie ausgeführt werden, den Prozessor ferner dazu veranlassen, Folgendes zu bewerkstelligen: Einbetten der Template-Bits des Templates in das Bild, um ein Profil zu erzeugen, wobei das Profil die gleiche Größe aufweist wie das Bild.

**Revendications**

**1.** Un système de profilage biométrique multimodal (100) comprenant :

au moins un processeur ;

un module d'entrée (102), exécuté par le au moins un processeur, pour recevoir une image de couverture (104) d'une personne et un gabarit biométrique (106) de la personne ;

un module de détermination des exigences de sécurité (108), exécuté par l'au moins un processeur, pour recevoir une indication sur l'exigence de sécurité liée au profilage biométrique pour la personne ;

un module de détermination de seuil (110), exécuté par le au moins un processeur, pour déterminer une valeur seuil basée sur l'exigence de sécurité indiquée, sachant que la valeur seuil est destinée à limiter un nombre de bits de gabarit biométrique du gabarit biométrique (106) qui sont intégrés dans une position de bit prédéterminée d'un pixel d'image de couverture de l'image de couverture (104) sur la base de l'intensité d'image de couverture associée à la position de bit prédéterminée ; et

un module d'incorporation de bit de gabarit biométrique (118) pour générer une image de couverture intégrée (120) en incorporant le gabarit biométrique (106) dans l'image de couverture (104) ;

sachant que la limitation du nombre de bits de gabarit biométrique du gabarit biométrique (106) qui sont incorporés dans la position de bit prédéterminée du pixel de l'image de couverture de l'image de couverture (104) comprend que l'on détermine si l'intensité de l'image de couverture indique une image de couverture à haute intensité ou à basse intensité ;

sachant que pour un pixel d'image de couverture qui est divisé en une moindre partie (*a least part*) qui inclut les bits 1 - 4 et une grande partie (*a most part*) qui inclut les bits 5 - 8,

pour l'image de couverture à haute intensité, un pourcentage maximal des pixels de l'image de couverture qui peuvent être pris en compte pour l'intégration dans la 6ème position de bit est de $H_6T_{min}$ à $H_6T_{max}$, et

pour l'image de couverture de basse intensité, un pourcentage maximal de pixels de l'image de couverture pouvant être pris en compte pour l'intégration dans la 6ème position de bit est de $L_6T_{min}$ à $L_6T_{max}$.

sachant que $HeTmin$, $H_6T_{max}$, $L_6T_{min}$ et $L_6T_{max}$ sont des paramètres qui sont basés sur une catégorie de l'image de couverture (104) et

sachant que $H_6T_{min}$, $H_6T_{max}$, $L_6T_{min}$ et $L_6T_{max}$ correspondent respectivement à 63%, 67%, 8% et 11%.

**2.** Le système de profilage biométrique multimodal (100) d'après la revendication 1, sachant que l'exigence de sécurité comprend une exigence de haute sécurité (202), de sécurité moyenne (204) et de faible sécurité (206), et qu'une exigence de sécurité différente correspond à une application différente du système de profilage biométrique multimodal (100) et/ou

sachant que la valeur seuil pour une exigence de sécurité élevée est différente de la valeur seuil pour une exigence de sécurité moyenne.

**3.** Le système de profilage biométrique multimodal (100) d'après la revendication 1, sachant que pour un pixel d'image de couverture qui est divisé en une moindre partie qui inclut les bits 1 - 4 et une grande partie qui inclut les bits 5 - 8, pour l'image de couverture à haute intensité, un pourcentage maximal des pixels de l'image de couverture qui peuvent être pris en compte pour l'intégration dans la 5ème position de bit est de $H_5T_{min}$ à $H_5T_{max}$, et

pour l'image de couverture de basse intensité, un pourcentage maximal de pixels de l'image de couverture pouvant être pris en compte pour l'intégration dans la 5ème position de bit est de $L_5T_{min}$ à $L_5T_{max}$,

sachant que $H_5T_{min}$, $H_5T_{max}$, $L_5T_{min}$ et $L_5T_{max}$ sont des paramètres qui sont basés sur une catégorie de l'image de couverture et

sachant que de préférence $H_5T_{min}$, $H_5T_{max}$, $L_5T_{min}$ et $L_5T_{max}$ correspondent respectivement à 42%, 46%, 18% et 21%.

**4.** Le système de profilage biométrique multimodal (100) d'après l'une quelconque des revendications de 1 à 3, comprenant en outre :

un module de partition d'image de couverture (114), exécuté par le au moins un processeur, pour partitionner (606) l'image de couverture (104) en plusieurs blocs prédéterminés ;

un module de génération de séquence aléatoire (116), exécuté par le au moins un processeur, pour générer (608) une séquence aléatoire afin de rendre aléatoire la sélection des pixels d'image de couverture d'au moins un des blocs de l'image de couverture (104) ; et

sachant que le module d'incorporation de bit de gabarit biométrique (118), exécuté par le au moins un processeur, est destiné à incorporer (612) un bit de gabarit biométrique du gabarit biométrique (106) dans une position de bit appropriée d'un pixel d'image de couverture du au moins un des blocs de l'image de couverture (104) sur la base d'un nombre total de « 1 » en positions de bit prédéterminées du pixel d'image de couverture du au moins un des blocs selon la sélection aléatoire des pixels d'image de couverture du au moins un des blocs de l'image de couverture (104).

5. Le système de profilage biométrique multimodal (100) d'après la revendication 4, sachant que pour un pixel d'image de couverture qui est divisé en une moindre partie qui inclut les bits 1 - 4 et une grande partie qui inclut les bits 5 - 8, les positions de bit prédéterminées du pixel de l'image de couverture comprennent les positions de bit 7ème et 8ème du pixel de l'image de couverture ou

les positions de bit prédéterminées du pixel de l'image de couverture comprennent les positions de bit 6ème, 7ème et 8ème du pixel de l'image de couverture.

6. Le système de profilage biométrique multimodal (100) d'après l'une quelconque des revendications de 1 à 3, sachant que

le module d'incorporation de bit de gabarit biométrique (118), exécuté par le au moins un processeur, est destiné à incorporer (612) des bits de gabarit biométrique du gabarit biométrique dans des positions de bits appropriées d'un pixel d'image de couverture d'un bloc de l'image de couverture (104) sur la base de la détermination d'un nombre total de « 1 » en positions de bit 7ème et 8ème du pixel de l'image de couverture qui est divisé en une moindre partie qui inclut les bits 1 - 4 et une grande partie qui inclut les bits 5 - 8, sachant que pour une exigence de sécurité élevée,

en réponse à une détermination que le nombre total de « 1 » dans les positions de bit 7ème et 8ème du pixel de l'image de couverture est 0, le module d'incorporation de bits de gabarit biométrique (118) doit intégrer les bits de gabarit biométrique du gabarit biométrique (106) dans les positions de bit 1ère et 2ème du pixel de l'image de couverture du bloc de l'image de couverture (104),

en réponse à une détermination que le nombre total de « 1 » dans les positions de bit 7ème et 8ème du pixel de l'image de couverture est 1, le module d'incorporation de bits de gabarit biométrique (118) doit intégrer les bits de gabarit biométrique du gabarit biométrique (106) dans les positions de bit 1ère, 2ème et 3ème du pixel de l'image de couverture du bloc de l'image de couverture (104), et

en réponse à une détermination que le nombre total de « 1 » dans les positions de bit 7ème et 8ème du pixel de l'image de couverture est 2, le module d'incorporation de bits de gabarit biométrique (118) doit intégrer les bits de gabarit biométrique du gabarit biométrique (106) dans la 1ère position de bit, et si une valeur de compteur pour une 6ème position de bit du pixel image de couverture du bloc de l'image de couverture (104) est inférieure à la valeur seuil, alors dans la 6ème position de bit du pixel image de couverture du bloc de l'image de couverture (104), et sinon dans la 2ème position de bit du pixel image de couverture du bloc de l'image de couverture (104).

7. Le système de profilage biométrique multimodal (100) d'après l'une quelconque des revendications de 1 à 3, sachant que

le module d'incorporation de bit de gabarit biométrique (118), exécuté par le au moins un processeur, est destiné à incorporer des bits de gabarit biométrique du gabarit biométrique dans des positions de bits appropriées d'un pixel d'image de couverture d'un bloc de l'image de couverture (104) sur la base de la détermination d'un nombre total de « 1 » en positions de bit 6ème, 7ème et 8ème du pixel de l'image de couverture qui est divisé en une moindre partie qui inclut les bits 1 - 4 et une grande partie qui inclut les bits 5 - 8, sachant que pour une exigence de sécurité moyenne,

en réponse à une détermination que le nombre total de « 1 » dans les positions de bit 6ème, 7ème et 8ème du pixel de l'image de couverture est 0, le module d'incorporation de bits de gabarit biométrique (118) doit intégrer les bits de gabarit biométrique du gabarit biométrique (106) dans les positions de bit 1ère et 2ème du pixel de l'image de couverture du bloc de l'image de couverture (104),

en réponse à une détermination que le nombre total de « 1 » dans les positions de bit 6ème, 7ème et 8ème du pixel de l'image de couverture est 1, le module d'incorporation de bits de gabarit biométrique (118) doit intégrer les bits de gabarit biométrique du gabarit biométrique (106) dans les positions de bit 1ère, 2ème et 3ème du pixel de l'image de couverture du bloc de l'image de couverture (104),

en réponse à une détermination que le nombre total de « 1 » dans les positions de bit 6ème, 7ème et 8ème du pixel de l'image de couverture est 2, le module d'incorporation de bits de gabarit biométrique (118) doit intégrer les bits de gabarit biométrique du gabarit biométrique (106) dans la 1ère position de bit, et si une valeur de compteur pour une 5ème position de bit du pixel image de couverture du bloc de l'image de couverture (104) est inférieure à la valeur seuil, alors dans la 5ème position de bit du pixel image de couverture du bloc de l'image de couverture (104), et sinon dans la 3ème position de bit du pixel image de couverture du bloc de l'image de couverture (104), et

en réponse à une détermination que le nombre total de « 1 » dans les positions de bit 6ème, 7ème et 8ème du pixel de l'image de couverture est 3, le module d'incorporation de bits de gabarit biométrique (118) doit intégrer les bits de gabarit biométrique du gabarit biométrique (106) dans les positions de bit 1ère et 2ème du pixel image de couverture du bloc de l'image de couverture (104), et si une valeur de compteur pour la 5ème position de bit du pixel image de couverture du bloc de l'image de couverture (104) est inférieure à la valeur seuil, alors dans la 5ème position de bit du pixel image de couverture du bloc de l'image de couverture (104), et sinon dans la 3ème position de bit du pixel image de couverture du bloc de l'image de couverture (104).

8. Le système de profilage biométrique multimodal (100) d'après l'une quelconque des revendications de 1 à 3, sachant que

le module d'incorporation de bit de gabarit biométrique (118), exécuté par le au moins un processeur, est destiné à incorporer des bits de gabarit biométrique du gabarit biométrique dans des positions de bits appropriées d'un pixel d'image de couverture d'un bloc de l'image de couverture (104) sur la base de la détermination d'un nombre total de « 1 » en positions de bit 6ème, 7ème et 8ème du pixel de l'image de couverture qui est divisé en une moindre partie qui inclut les bits 1 - 4 et une grande partie qui inclut les bits 5 - 8, sachant que pour une exigence de sécurité basse,

en réponse à une détermination que le nombre total de « 1 » dans les positions de bit 6ème, 7ème et 8ème du pixel de l'image de couverture est 0 ou 1, le module d'incorporation de bits de gabarit biométrique (118) doit intégrer les bits de gabarit biométrique du gabarit biométrique (106) dans les positions de bit 1ère et 2ème du pixel de l'image de couverture du bloc de l'image de couverture (104),

en réponse à une détermination que le nombre total de « 1 » dans les positions de bit 6ème, 7ème et 8ème du pixel de l'image de couverture est 2, le module d'incorporation de bits de gabarit biométrique (118) doit intégrer les bits de gabarit biométrique du gabarit biométrique (106) dans les positions de bit 1ère, 2ème et 3ème du pixel de l'image de couverture du bloc de l'image de couverture (104), et

en réponse à une détermination que le nombre total de « 1 » dans les positions de bit 6ème, 7ème et 8ème du pixel de l'image de couverture est 3, le module d'incorporation de bits de gabarit biométrique (118) doit intégrer les bits de gabarit biométrique du gabarit biométrique (106) dans les positions de bit 1ère, 2ème et 4ème du pixel de l'image de couverture du bloc de l'image de couverture (104).

9. Le système de profilage biométrique multimodal (100) d'après l'une quelconque des revendications de 1 à 8, sachant que pour un pixel d'image de couverture qui est divisé en une moindre partie qui inclut les bits 1 - 4 et une grande partie qui inclut les bits 5 - 8,

l'intensité de l'image de couverture associée à une 5ème position de bit est basée sur un pourcentage de pixels d'image de couverture qui sont dans une plage d'intensité de 96 à 255 sur une échelle d'intensité de 0 à 255, et l'intensité de l'image de couverture associée à une 6ème position de bit est basée sur un pourcentage de pixels de l'image de couverture qui sont dans une plage d'intensité de 192 à 255 sur l'échelle d'intensité de 0 à 255.

10. Un procédé (900) de profilage biométrique multimodal, le procédé comprenant le fait de :

recevoir (902) une image d'une personne et un gabarit biométrique (106) de la personne ;
déterminer (904), par un processeur, au moins une valeur seuil pour incorporer des bits de gabarit biométrique du gabarit biométrique (106) dans l'une des positions de bit 5ème et 6ème d'un pixel d'image de l'image, sachant que la valeur seuil est destinée à limiter un nombre de bits de gabarit biométrique du gabarit biométrique (106) qui sont intégrés dans une position de bit prédéterminée d'un pixel d'image de couverture de l'image de couverture (104) sur la base de l'intensité d'image de couverture associée à la position de bit prédéterminée, et sachant que le pixel d'image est divisible en 8 bits, et qu'une intensité du pixel d'image augmente de bit 1 à bit 8 ; et

générer une image de couverture intégrée (120) en incorporant le gabarit biométrique (106) dans l'image de couverture (104) ;

sachant que la limitation du nombre de bits de gabarit biométrique du gabarit biométrique (106) qui sont incorporés dans la position de bit prédéterminée du pixel de l'image de couverture de l'image de couverture (104) comprend que l'on détermine si l'intensité de l'image de couverture indique une image de couverture à haute intensité ou à basse intensité ;

sachant que pour un pixel d'image de couverture qui est divisé en une moindre partie (*a least part*) qui inclut les bits 1 - 4 et une grande partie (*a most part*) qui inclut les bits 5 - 8,

pour l'image de couverture à haute intensité, un pourcentage maximal des pixels de l'image de couverture qui peuvent être pris en compte pour l'intégration dans la 6ème position de bit est de $H_6T_{min}$ à $H_6T_{max}$, et

pour l'image de couverture de basse intensité, un pourcentage maximal de pixels de l'image de couverture pouvant être pris en compte pour l'intégration dans la 6ème position de bit est de $L_6T_{min}$ à $L_6T_{max}$.

sachant que $H_6T_{min}$, $H_6T_{max}$, $L_6T_{min}$ et $L_6T_{max}$ sont des paramètres qui sont basés sur une catégorie de l'image de couverture (104) et

sachant que $H_6T_{min}$, $H_6T_{max}$, $L_6T_{min}$ et $L_6T_{max}$ correspondent respectivement à 63%, 67%, 8% et 11%.

**11.** Le procédé de profilage biométrique multimodal d'après la revendication 10, comprenant en outre le fait de :

intégrer les bits de gabarit biométrique du gabarit biométrique (106) pour la personne dans l'image afin de générer un profil biométrique pour la personne ; et de

vérifier (714) l'identité d'une personne inconnue en comparant un gabarit biométrique pour la personne inconnue au gabarit biométrique (106) à partir du profil biométrique de la personne, et de

sachant que la vérification (714) de l'identité d'une personne inconnue par une comparaison d'un gabarit biométrique pour la personne inconnue au gabarit biométrique (106) à partir du profil biométrique pour la personne comprend en outre de préférence le fait de :

générer un score basé sur la comparaison du gabarit biométrique pour la personne inconnue au gabarit biométrique (106) à partir du profil biométrique de la personne ; et de

déterminer si le score dépasse un seuil de score prédéterminé.

**12.** Un support non transitoire lisible par ordinateur sur lequel sont stockées des instructions lisibles par machine pour le profilage biométrique multimodal, les instructions lisibles par machine lorsqu'elles sont exécutées amènent un processeur à :

recevoir une image d'une personne et un gabarit biométrique (106) de la personne qui est à incorporer dans l'image ;

déterminer au moins une valeur seuil basée sur l'image pour limiter l'incorporation des bits de gabarit biométrique du gabarit dans au moins une position de bit prédéterminée du pixel d'image de l'image, sachant que la valeur seuil est destinée à limiter un nombre de bits de gabarit biométrique du gabarit biométrique (106) qui sont intégrés dans une position de bit prédéterminée d'un pixel d'image de couverture de l'image de couverture (104) sur la base de l'intensité d'image de couverture associée à la position de bit prédéterminée ; et de

générer une image de couverture intégrée (120) en incorporant le gabarit biométrique (106) dans l'image de couverture (104) ;

sachant que la limitation du nombre de bits de gabarit biométrique du gabarit biométrique (106) qui sont incorporés dans la position de bit prédéterminée du pixel de l'image de couverture de l'image de couverture (104) comprend que l'on détermine si l'intensité de l'image de couverture indique une image de couverture à haute intensité ou à basse intensité ;

sachant que pour un pixel d'image de couverture qui est divisé en une moindre partie (*a least part*) qui inclut les bits 1 - 4 et une grande partie (*a most part*) qui inclut les bits 5 - 8,

pour l'image de couverture à haute intensité, un pourcentage maximal des pixels de l'image de couverture qui peuvent être pris en compte pour l'intégration dans la 6ème position de bit est de $H_6T_{min}$ à $H_6T_{max}$, et

pour l'image de couverture de basse intensité, un pourcentage maximal de pixels de l'image de couverture pouvant être pris en compte pour l'intégration dans la 6ème position de bit est de $L_6T_{min}$ à $L_6T_{max}$.

sachant que $H_6T_{min}$, $H_6T_{max}$, $L_6T_{min}$ et $L_6T_{max}$ sont des paramètres qui sont basés sur une catégorie de l'image de couverture (104) et

sachant que $H_6T_{min}$, $H_6T_{max}$, $L_6T_{min}$ et $L_6T_{max}$ correspondent respectivement à 63%, 67%, 8% et 11%.

**13.** Le support non transitoire lisible par ordinateur d'après la revendication 12, comprenant en outre des instructions lisibles par machine, lesquelles, lorsqu'elles sont exécutées, amènent en outre le processeur à :
incorporer les bits de gabarit du gabarit dans l'image afin de générer un profil, sachant que le profil présente la même taille que l'image.

FIG. 1

FIG. 2

EP 2 930 639 B1

| 8 | 7 | 6 | 5 | 4 | 3 | 2 | 1 |

Pi

Most Part        Least Part

**FIG. 3**

Cover Image
104

Calculate Threshold
$y_1 = (1.9 \times x_1) - 1.4$
Or
$y_2 = (0.58 \times x_2) + 11.3$

Threshold value
$y_1$ or $y_2$

**FIG. 4**

| | Range | Percentage of Pixels in the Range | Maximum Percentage of Pixels that can be Considered for Embedding |
|---|---|---|---|
| 6<sup>th</sup> Bit | 192 - 255 | 35% / 100% - High Intensity Image | $H_6 = 63\text{-}67\%$ |
| | | 6% / 100% - Low Intensity Image | $L_6 = 8\text{-}11\%$ |
| | | | |
| 5<sup>th</sup> Bit | 96 - 255 | 58% / 100% - High Intensity Image | $H_5 = 42\text{-}46\%$ |
| | | 15% / 100% - Low Intensity Image | $L_5 = 18\text{-}21\%$ |

# FIG. 5

600

**FIG. 6**

700

| Capture Fingerprint, Facial Image, Retinal Scan 702 | → | Feature Extraction 704 | → | Multimodal Biometric Profiling 706 | → | Storage In Database / Portable Token / Individual Workstation 708 |

Retrieve Biometric Profile 716

| Present Biometrics for Verification / Identification 710 | → | Send Biometric Data 712 | → | Verification 714 | ← | Retrieve Biometric Data From Biometric Profile 718 |

**FIG. 7**

EP 2 930 639 B1

800

```
RECEIVE COVER IMAGE AND BIOMETRIC TEMPLATE
FOR A PERSON
802
```

```
RECEIVE AN INDICATION OF A SECURITY
REQUIREMENT RELATED TO BIOMETRIC
PROFILING FOR THE PERSON
804
```

```
DETERMINE A THRESHOLD VALUE BASED ON THE
INDICATED SECURITY REQUIREMENT
806
```

# FIG. 8

900

RECEIVE IMAGE AND BIOMETRIC TEMPLATE FOR A
PERSON
902

DETERMINE AT LEAST ONE THRESHOLD VALUE
FOR EMBEDDING BIOMETRIC TEMPLATE BITS
OF THE BIOMETRIC TEMPLATE IN $5^{TH}$ OR $6^{TH}$ BIT
POSITIONS OF AN IMAGE PIXEL OF THE IMAGE
904

# FIG. 9

**FIG. 10**

EP 2 930 639 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004031920 A1

**Non-patent literature cited in the description**

- **RATNAKIRTI ROY et al.** *Evaluating image steganography techniques: Future research challenges*

- **AGRAWAL N et al.** *Biometric data hiding: A3 Factor authentication approach to verify identity with a single image using steganography, encryption and matching*